# EUROPÄISCHE PATENTSCHRIFT

(11) **EP 3 574 234 B1**
(45) Veröffentlichungstag und Bekanntmachung des Hinweises auf die Patenterteilung: **23.12.2020**
(21) Anmeldenummer: 18701112.7
(22) Anmeldetag: 09.01.2018
(51) Int. Cl.: F16H 47/08, H02K 7/10, F16H 61/64

(54) **VERFAHREN ZUM BETREIBEN EINES ANTRIEBSSTRANGES ZUM DREHZAHLVARIABLEN ANTREIBEN EINER ARBEITSMASCHINE UND ANTRIEBSSTRANG**
METHOD FOR OPERATING A DRIVETRAIN FOR DRIVING A WORKING MACHINE AT A VARIABLE ROTATIONAL SPEED, AND DRIVETRAIN
PROCÉDÉ POUR FAIRE FONCTIONNER UNE CHAÎNE CINÉMATIQUE SERVANT À L'ENTRAÎNEMENT À VITESSE VARIABLE D'UNE MACHINE DE TRAVAIL, ET CHAÎNE CINÉMATIQUE

(30) Priorität: 25.01.2017 DE 102017101339
(43) Veröffentlichungstag der Anmeldung: 04.12.2019
(73) Patentinhaber: Voith Patent GmbH, 89522 Heidenheim (DE)
(72) Erfinder: GORETZKI, Peter, 74599 Wallhausen (DE); GRAF, Hartmut, 73660 Urbach (DE); TÄUBER, Thomas, 74564 Crailsheim (DE)
(74) Vertreter: Voith Patent GmbH - Patentabteilung
(86) Internationale Anmeldenummer: PCT/EP2018/050387
(87) Internationale Veröffentlichungsnummer: WO 2018/137916

(56) Entgegenhaltungen:
- WO-A2-2015/071349
- DE-A1- 10 343 871
- GB-A- 847 742
- GB-A- 994 256
- US-A- 3 277 744

## Beschreibung

Die Erfindung betrifft ein Verfahren zum Betreiben eines Antriebsstranges zum drehzahlvariablen Antreiben einer Arbeitsmaschine. Die Erfindung betrifft ferner die Ausführung eines Antriebsstranges.

Antriebsstränge mit einer mit konstanter Drehzahl betreibbaren Antriebsmaschine und einer mit dieser gekoppelten Leistungsübertragungsvorrichtung zum Antreiben einer Arbeitsmaschine mit variabler Drehzahl sind in unterschiedlichen Ausführungen aus dem Stand der Technik bekannt. Stellvertretend wird auf Voith-Druck cr168de "Pumpen und Kompressoren effizient regeln"; 04/2013 sowie WO2015071349 A1 verwiesen

Ein derartiger Antriebsstrang umfasst zumindest eine Antriebsmaschine und eine Leistungsübertragungsvorrichtung mit einem wenigstens mittelbar mit der Antriebsmaschine verbundenen Eingang, einem wenigstens mittelbar mit der Arbeitsmaschine verbindbaren oder verbundenen Ausgang, einen hydrodynamischen Drehzahl-/Drehmomentwandler mit zumindest einem Pumpenschaufelrad, einem Turbinenschaufelrad und einem Leitrad, welche einen mit Betriebsmittel befüllbaren Arbeitsraum bilden, wobei wenigstens eines der Schaufelräder Verstellschaufeln oder Verstellschaufelsegmente aufweist und einem Überlagerungsgetriebe. Das Überlagerungsgetriebe umfasst zumindest ein Planetenradgetriebe mit einem Hohlrad, einem Sonnenrad sowie einem Planetenträger mit mehreren Planeten als Elemente des Planetenradgetriebes. Der Eingang der Leistungsübertragungsvorrichtung ist mit dem Pumpenrad des hydrodynamischen Wandlers und einem ersten Element des Planetenradgetriebes wenigstens mittelbar, vorzugsweise direkt verbunden. Das Turbinenrad des hydrodynamischen Wandlers ist mit einem zweiten Element des Planetenradgetriebes wenigstens mittelbar, vorzugsweise direkt verbunden und ein drittes Element des Planetenradgetriebes ist wenigstens mittelbar mit dem Ausgang verbunden oder bildet diesen. Die Leistung wird dadurch in Leistungsverzweigung über einen hydrodynamischen und einen mechanischen Leistungszweig übertragen, wobei die Leistungsanteile im Planetengetriebe summiert werden. Zumindest dem Wandler, vorzugsweise der Leistungsübertragungsvorrichtung ist ein Betriebmittelversorgungs- und/oder Führungssystem zugeordnet und es ist eine Einrichtung zur Befüllung und/oder Entleerung des Wandlers vorgesehen. der Wandler ist während des Betriebes befüllt. Zur Steuerung des Übertragungsverhaltens des Wandlers ist dieser als Stellwandler mit verstellbaren Schaufeln am Leitrad ausgebildet.
Wird als Antriebsmaschine eine elektrische Antriebsmaschine verwendet, bedeutet dies, dass diese bei direkter Ankoppelung an die Leistungsübertragungsvorrichtung beim Anfahren sofort mit der durch die Kopplung der Arbeitsmaschine am Ausgang anliegenden Last beaufschlagt wird. Da insbesondere derartige Antriebskonzepte für den Antrieb von Arbeitsmaschinen mit hohem Leistungsbedarf eingesetzt werden, erfolgt das Anfahren unter sehr hoher Last, bedingt durch die Trägheit Arbeitsmaschine. Dies bedingt zum einen sehr hohe erforderliche Einschaltströme der elektrischen Antriebsmaschine, die in starken Netzschwankungen resultieren. Zur Vermeidung dieses Nachteils wird dem Wandler daher eine hydrodynamische Kupplung vorgeordnet, welche während des Anfahrens der Antriebsmaschine die Leistungsübertragung zwischen Eingang und Ausgang der Leistungsübertragungsvorrichtung übernimmt. Derartige Kupplungen sind in unterschiedlichen Anwendungen beispielsweise aus GB 847742, GB 994256 sowie DE 10343871 A1 vorbekannt. Diese benötigt jedoch zusätzlichen Bauraum und ist konstruktiv und steuerungstechnisch in die Leistungsübertragungsvorrichtung einzubinden. Neben einem erhöhten konstruktiven und steuerungstechnischen Aufwand ist eine derartige Lösung somit auch durch Erhöhung der Anzahl zu wartender Komponenten und erhöhten Investitionskosten charakterisiert.
Der Erfindung liegt daher die Aufgabe zugrunde, ein Antriebsstrang zum Antreiben einer drehzahlvariablen Arbeitsmaschine und ein Verfahren zu deren Betreiben derart weiterzubilden, dass die Nachteile vermieden werden. Insbesondere ist mit einer möglichst kompakt ausgeführten Leistungsübertragungsvorrichtung nach Möglichkeit unter Verzicht auf eine hydrodynamische Kupplung den Anforderungen eines drehzahlvariablen Antriebes von Arbeitsmaschinen großer Leistungsklasse gerecht zu werden und ein sanftes Anfahren der elektrischen Antriebsmaschine unter Vermeidung temporärer Netzüberlastungen

Die erfindungsgemäße Lösung ist durch die Merkmale des Anspruches 1 und 2 beschrieben Die vorrichtungsmäßige Umsetzung ist in Anspruch 12 wiedergegeben. Vorteilhafte Ausgestaltungen sind in den Unteransprüchen beschrieben.

Ein erfindungsgemäßes Verfahren zum Betreiben eines Antriebsstranges zum drehzahlvariablen Antreiben einer Arbeitsmaschine mit einer mit konstanter Drehzahl betreibbaren elektrischen Antriebsmaschine und einer Leistungsübertragungsvorrichtung, wobei die Leistungsübertragungsvorrichtung zumindest umfasst:
- einen Eingang zum wenigstens mittelbaren Verbinden mit der Antriebsmaschine;
- einen Ausgang zum wenigstens mittelbaren Verbinden mit der Arbeitsmaschine;
- einen hydrodynamischen Drehzahl-/Drehmomentwandler mit zumindest einem Pumpenschaufelrad, einem Turbinenschaufelrad und einem Leitrad, welche einen mit Betriebsmittel befüllbaren Arbeitsraum bilden;
- ein Überlagerungsgetriebe mit zumindest einem Planetenradgetriebe, umfassend ein Hohlrad, ein Sonnenrad sowie einen Planetenträger mit mehreren Planeten als Elemente des Planetenradgetriebes, wobei
   der Eingang der Leistungsübertragungsvorrichtung mit dem Pumpenrad des hydrodynamischen Drehzahl-/Drehmomentwandlers und einem ersten Element des Planetenradgetriebes wenigstens mittelbar, vorzugsweise direkt verbunden ist, das Turbinenrad des hydrodynamischen Drehzahl-/Drehmomentwandlers mit einem zweiten Element des Planetenradgetriebes wenigstens mittelbar verbunden ist und ein drittes Element des Planetenradgetriebes wenigstens mittelbar mit dem Ausgang der Leistungsübertragungsvorrichtung verbunden ist oder diesen bildet;
mit einem zumindest dem hydrodynamischen Drehzahl-/Drehmomentwandler zugeordneten Betriebmittelversorgungs- und/oder Führungssystem und einer Einrichtung zur Beeinflussung des Füllungszustandes des hydrodynamischen Drehzahl-/Drehmomentwandlers;
**umfasst die folgenden Schritte:**
- Hochfahren der elektrischen Antriebsmaschine aus dem Stillstand bei entleertem hydrodynamischen Drehzahl-/Drehmomentwandler bis zum Erreichen einer vordefinierten, die Betriebsweise der Antriebsmaschine wenigstens mittelbar charakterisierenden Größe, insbesondere der Nenndrehzahl dieser
- zeitgleich zum Erreichen der vordefinierten, die Betriebsweise der Antriebsmaschine wenigstens mittelbar charakterisierenden Größe, insbesondere der Nenndrehzahl oder zeitlich versetzt nach Erreichen dieser Befüllung des hydrodynamischen Drehzahl-/Drehmomentwandlers und Antreiben des Turbinenrades
- Antreiben des dritten Elementes des Planetenradgetriebes mit einer Drehzahl, welche aus einer durch das Planetenradgetriebe definierten Überlagerung der Drehzahl des mit der elektrischen Antriebsmaschine verbundenen ersten Elementes des Planetenradgetriebes und der Drehzahl des mit dem Turbinenrad wenigstens mittelbar verbundenen zweiten Elementes des Planetengetriebes resultiert.

Diese Verfahrensschritte beschreiben dabei Grundschritte des Verfahrens. Diese sind durch weitere vor- oder nachgeordnete Verfahrensschritte oder Zwischenschritte wie in Anspruch 1 oder 2 beschrieben, ergänzbar und modifizierbar.

Unter dem Hochfahren einer Antriebsmaschine, insbesondere einer mit konstanter Drehzahl betriebenen Antriebsmaschine wird der Vorgang von der Inbetriebnahme (dem Zeitpunkt der Einschaltung/Zuschaltung oder des Startens von Anlassverfahren vor Zuschaltung zum Stromnetz) bis zum Erreichen einer vordefinierten, die Betriebsweise der Antriebsmaschine wenigstens mittelbar charakterisierenden Größe verstanden. Bei dieser Größe handelt es sich vorzugsweise um die Nenndrehzahl der elektrischen Antriebsmaschine.

Unter dem Begriff "wenigstens mittelbar verbunden" werden Möglichkeiten der direkten Kopplung/Verbindung verstanden oder aber einer indirekten Verbindung unter Zwischenordnung von drehmomentübertragenden Bauteilen, wobei auch Drehzahl-/Drehmomentwandlungseinrichtungen zwischengeordnet sein können.

Unter einer, eine Betriebsweise wenigstens mittelbar charakterisierende Größe wird insbesondere eine physikalische Größe verstanden, welche einen Zustand oder Prozess charakterisiert. Die Größe kann dabei direkt die Zustands- oder Prozessgröße am jeweiligen Funktionselement darstellen, beispielsweise die Drehzahl der Antriebsmaschine. Denkbar ist auch, diese Zustands- oder Prozessgröße durch andere Größen indirekt zu beschreiben. In diesem Fall besteht ein Zusammenhang, welcher über Funktionen oder Relationen zueinander abbildbar ist.

Das erfindungsgemäße Verfahren bietet den Vorteil, generell auf eine bauraumintensive zusätzliche hydrodynamische Kupplung verzichten zu können und trotzdem einen sanften Hochlauf der Antriebsmaschine zu gewährleisten. Dies wird insbesondere dadurch erzielt, dass während des Anlaufens der Antriebsmaschine durch die Entkoppelung des über den hydrodynamischen Drehzahl-/Drehmomentwandler realisierten hydrodynamischen Leistungszweiges die Antriebsmaschine nur noch das wenigstens mittelbar mit dieser über den Eingang der Leistungsübertragungsvorrichtung gekoppelte erste Element des Planetenradgetriebes angetrieben und dessen Trägheit (und die Reibmomente der Abtriebswelle) überwunden werden muss. Die Antriebsmaschine muss somit nicht gegen das volle Lastmoment der Arbeitsmaschine und die Massenträgheiten der gesamten Leistungsübertragungsvorrichtung arbeiten und kann hochgefahren werden. Das mit der Arbeitsmaschine über den Ausgang der Leistungsübertragungsvorrichtung wenigstens mittelbar verbundene dritte Element des Planetenradgetriebes stützt sich über die Verbindung an der Arbeitsmaschine ab und steht aufgrund von dessen großer Masse still. Am Turbinenrad stellt sich bedingt durch die Drehzahldifferenz zwischen erstem und drittem Element des Planetengetriebes und der Kopplung des zweiten Elementes des Planetengetriebes mit dem Turbinenrad eine resultierende Drehzahl ein. Dies bietet ferner den Vorteil, dass bei nach erfolgtem Start der Antriebsmaschine erfolgender Befüllung des Wandlers nicht erst die Trägheit des Turbinenrades überwunden werden muss und das dritte, den Ausgang bildende oder mit diesem verbundene Element angetrieben und der Ausgang beschleunigt wird. Dieses Verfahren ist somit mit geringem konstruktivem Aufwand realisierbar und erlaubt die Bereitstellung sehr kompakter, insbesondere in axialer Richtung kurz bauender Leistungsübertragungsvorrichtungen mit geringer Funktionsteileanzahl. Vorrichtungstechnisch sind gemäß Anspruch 13 lediglich ein Betriebsmittelversorgungs- und/oder Führungssystem für den hydrodynamischen Drehzahl-/Drehmomentwandler sowie entsprechende Einrichtungen zur Einstellung des Füllungszustandes des Wandlers, insbesondere Einrichtungen zur Befüllung und/oder Entleerung vorzusehen, ferner eine Steuervorrichtung, welche mit Erfassungseinrichtungen zur Erfassung von Istwerten von Zustand- oder Prozessgrößen des hydrodynamischen Drehzahl-/Drehmomentwandlers und der Antriebsmaschine gekoppelt ist sowie zur ggf. erforderlichen Ansteuerung einer Einrichtung zur Beeinflussung des Füllungszustandes des hydrodynamischen Drehzahl-/Drehmomentwandlers gekoppelt ist.

Nach Einstellung einer vordefinierten, die Betriebsweise der Antriebsmaschine wenigstens mittelbar charakterisierenden Größe, insbesondere der Einstellung der Nenndrehzahl der Antriebsmaschine wird der hydrodynamische Drehzahl-/Drehmomentwandler befüllt. Die Befüllung erfolgt vorzugsweise gesteuert. Diese kann zeitgleich oder mit zeitlichem Versatz erfolgen. Vorzugsweise wird jedoch eine möglichst zeitnahe Befüllung des Wandlers angestrebt.

Zur Einstellung des Übertragungsverhaltens des hydrodynamischen Drehzahl-/Drehmomentwandlers ist es in einer vorteilhaften Weiterbildung vorgesehen, dass zumindest eines der Schaufelräder des hydrodynamischen Drehzahl-/Drehmomentwandlers Verstellschaufeln oder Verstellschaufelsegmente aufweist und das Übertragungsverhalten des hydrodynamischen Drehzahl-/Drehmomentwandlers, insbesondere die Drehzahl des Turbinenrades durch Verstellung zumindest einzelner Verstellschaufeln oder Verstellschaufelsegmente an zumindest einem der Schaufelräder - Pumpenrad, Turbinenrad oder Leitrad - einstellbar ist. Dies erfolgt mit hochgefahrener Antriebsmaschine und befülltem Wandler, um eine Beschleunigung des dritten Elementes des Planetenradgetriebes zu gewährleisten.

Besonders vorteilhaft ist das Verfahren, wenn als Antriebsmaschine eine elektrische Antriebsmaschine in Form eines Synchron- oder Asynchronmotors zum Einsatz gelangt. Die erfindungsgemäße Vorgehensweise erlaubt hier eine starke Reduzierung der Einschaltströme und verhindert somit Überlastungen des Stromnetzes.

Zur sicheren Gewährleistung des Vorliegens des Zustandes "Entleert" am hydrodynamischen Drehzahl-/Drehmomentwandler ist es vorgesehen, dass dieser immer bei Vorliegen zumindest eines der nachfolgendend genannten Ereignisse entleert wird:
- beim oder nach Abschluss des Herunterfahren / einer Außerbetriebnahme des Antriebsstranges
   (Dies kann vorzugsweise je nach Anordnung des Auslasses beim Herunterfahren automatisch, insbesondere konstruktionsbedingt erfolgen oder aber gesteuert.)
- Detektion eines Füllungszustandes vor oder bei Inbetriebnahme nach Stillstand des Antriebsstranges
- Detektion eines Füllungszustandes bei Vorliegen einer Sollwertvorgabe zur Einstellung einer vordefinierten Betriebsweise der Arbeitsmaschine bei Stillstand des Antriebsstranges.

Durch die dabei vorzugsweise erfolgende zusätzliche Prüfung des Füllungszustandes kann mit Sicherheit ein Anfahren der elektrischen Antriebsmaschine mit entleertem Wandler gewährleistet werden, was insbesondere nach längeren Stillstandszeiten von Vorteil ist, insbesondere wenn keine automatische Entleerung des hydrodynamischen Drehzahl-/Drehmomentwandlers bei Außerbetriebnahme des Antriebsstranges vorgesehen ist oder letztere zwar vorgesehen jedoch fehlerhaft verlaufen ist.

Um insbesondere eine Überlastung der Lagerung des Turbinenrades durch zu hohe Drehzahlen beim Starten der Antriebsmaschine zu vermeiden, sind zumindest zwei weitere grundlegende Erweiterungen des Grundverfahrens denkbar.

Gemäß einer ersten grundlegenden Ausführung des erfindungsgemäßen Grundverfahrens ist gemäß Anspruch 1 vorgesehen, ein Antriebsmoment auf der Abtriebsseite, d.h. zumindest mittelbar in das dritte Element des Planetenradgetriebes einzuleiten. In besonders vorteilhafter Ausbildung wird bei stehender elektrischer Antriebsmaschine und entleertem hydrodynamischen Drehzahl-/Drehmomentwandler das dritte Element des Planetenradgetriebes über eine erste Hilfsantriebseinrichtung wenigstens mittelbar, vorzugsweise direkt angetrieben. Zeitgleich dazu oder mit zeitlichem Versatz zur Einstellung einer vordefinierten Auslegungsdrehzahl des dritten Elementes des Planetenradgetriebes erfolgt das Hochfahren und der direkte Antrieb des ersten Elementes des Planetenradgetriebes durch die elektrische Antriebsmaschine bei noch entleertem hydrodynamischem Wandler. Die erforderliche Drehzahl, auf die die Hilfsantriebseinrichtung auszulegen ist, ergibt sich aus Limitierungen des Turbinenrades (Lagerung, Festigkeit, Verformung unter Fliehkraft) und der Übersetzung des Planetengetriebes. Bei der Auslegung der Hilfsantriebsmaschine, welche insbesondere als Rotordrehvorrichtung ausgebildet sein kann, gilt es, das Lastmoment der Arbeitsmaschine zu berücksichtigen Die Befüllung des hydrodynamischen Drehzahl-/Drehmomentwandlers bei oder nach dem Erreichen der Nenndrehzahl der Antriebsmaschine bedingt eine Drehmomentübertragung über diesen und über den Antrieb des Turbinenrades und dessen Kopplung mit dem zweiten Element des Planetenradgetriebes eine Umkehr der Kraftflussrichtung am dritten Element des Planetenradgetriebes. Die erste Hilfsantriebseinrichtung wird daher bei Umkehrung des Kraftflusses zum dritten Element des Planetenradgetriebes durch Antrieb des zweiten Elementes des Planetenradgetriebes durch das Turbinenrad bei befülltem hydrodynamischen Drehzahl-/Drehmomentwandler deaktiviert. Der Antrieb des dritten Elementes des Planetenradgetriebes erfolgt dann mit der durch das Planetenradgetriebe definierten Überlagerungsdrehzahl aus der Drehzahl des mit der elektrischen Antriebsmaschine verbundenen ersten Elementes des Planetenradgetriebes und der Drehzahl des mit dem Turbinenrad bei befülltem Wandler wenigstens mittelbar verbundenen zweiten Elementes des Planetengetriebes über das Turbinenrad. Um ein Gegenarbeiten der ersten Hilfsantriebseinrichtung bei hydrodynamischer Leistungsübertragung bei befülltem Wandler zum Planentenradgetriebe zu vermeiden, wird die erste Hilfsantriebseinrichtung bei Antrieb des dritten Elementes des Planetenradgetriebes mit der aus der durch das Planetenradgetriebe definierten Überlagerungsdrehzahl aus der der Drehzahl des mit der elektrischen Antriebsmaschine verbundenen ersten Elementes des Planetenradgetriebes und der Drehzahl des mit dem hydrodynamisch angetriebenen Turbinenrad wenigstens mittelbar verbundenen zweiten Elementes des Planetengetriebes deaktiviert.

Die Einleitung des Antriebsmomentes und damit der Betrieb der ersten Hilfsantriebseinrichtung kann gesteuert erfolgen, insbesondere hinsichtlich des Zeitpunktes der Zuschaltung sowie der Größe des Antriebsmomentes und der erzielbaren Drehzahl. Desweiteren kann die Einleitung des Antriebsmomentes und Deaktivierung dessen gesteuert oder automatisiert erfolgen.

In einer besonders vorteilhaften Ausbildung dieser ersten grundlegenden Erweiterung des erfindungsgemäßen Grundverfahrens erfolgt zum Ausschluss eines Gegenarbeiten der ersten Hilfsantriebsmaschine bei kombinierter mechanisch-hydrodynamischer Leistungsübertragung die Einleitung des Antriebsmomentes in das dritte Element des Planetengetriebes über eine mit diesem über einen Freilauf oder eine selbstsynchronisierende Schaltkupplung verbundene Einrichtung, insbesondere Wellendrehvorrichtung, wobei die selbstsynchronisierende Schaltkupplung derart ausgelegt ist, bei befülltem hydrodynamischen Drehzahl-/Drehmomentwandler und Umkehrung des Kraftflusses durch Antrieb des dritten Elementes des Planetenradgetriebes über das Turbinenrad die erste Hilfsantriebseinrichtung zu entkoppeln. Dies bietet den Vorteil einer automatischen Deaktivierung bei Eintritt des Ereignisses und vermeidet eine gesonderte Überwachung der Betriebseise der ersten Hilfsantriebseinrichtung im Hinblick auf deren gezielte Deaktivierung.

Andere Ausführungen zur Entkoppelung der ersten Hilfsantriebseinrichtung sind ebenfalls denkbar. So können beispielsweise schaltbare Kupplungen in der Verbindung zwischen drittem Element des Planetenradgetriebes oder einem mit diesem verbundenen Element und der Hilfsantriebseinrichtung erfolgen. Die Betätigung zum Koppeln und Entkoppeln erfolgt dann gesteuert. Desweiteren kann bei Verwendung von Hilfsantriebseinrichtungen in Form von Rotordrehvorrichtungen mit Schwenkritzeln, eine Entkopplung durch Verschwenken des Ritzels und Außereingriffbringen dessen mit dem Gegenritzel in der Verbindung zwischen Rotordrehvorrichtung und dem drittem Element des Planetenradgetriebes erfolgen.

Um die Antriebsmaschine bei dieser ersten grundlegenden Erweiterung des erfindungsgemäßen Grundverfahrens auch möglichst lastfrei und definiert hochzufahren, wird das Hochfahren gemäß einer besonders vorteilhaften Ausführung dieser Weiterbildung durch eine Hilfsstartvorrichtung zusätzlich unterstützt. Diese Hilfsstartvorrichtung kann verschiedenartig ausgebildet sind. Denkbar sind der Einsatz von Softstartern, Frequenzumrichtern oder aber auch Systemen von mit der Antriebsmaschine gekoppelten Hilfsmotoren, wobei die Kopplung nicht starr sondern vorzugsweise über eine Übertragungseinheit erfolgt, welche vorzugsweise eine Drehzahl-/Drehmomentwandlung ermöglicht.

Das zusätzliche Einleiten des Antriebsmomentes in das dritte Element des Planetengetriebes bietet den Vorteil, dass zum einen die Turbinendrehzahl bei noch nicht hochgefahrener Antriebsmaschine aufgrund der Drehzahldifferenz zwischen erstem und dritten Element begrenzt wird, ferner während des Motorstartes zu jeder Zeit definierte Betriebszustände einstellbar sind.

Gemäß Anspruch 2 ist das Grundverfahren in einer zweiten Ausführung durch nachfolgende Verfahrensschritte weitergebildet:
- bei stehender elektrischer Antriebsmaschine und entleertem hydrodynamischen Drehzahl-/Drehmomentwandler wird das dritte Element des Planetenradgetriebes über eine erste Hilfsantriebseinrichtung wenigstens mittelbar, vorzugsweise direkt angetrieben.
   Dies erfolgt in Analogie zur ersten Ausführung.
Deweiteren wird zeitgleich oder mit zeitlichem Versatz zum Antrieb des dritten Elementes des Planetenradgetriebes das erste Element des Planetenradgetriebes oder die Verbindung von erstem Element des Planetenradgetriebes und elektrischer Antriebsmaschine (Hauptantriebsmaschine) über eine zweite Hilfsantriebseinrichtung wenigstens mittelbar, vorzugsweise direkt angetrieben. Die elektrische Antriebsmaschine wird über den Antrieb des ersten Elementes des Planetenradgetriebes oder die Verbindung von erstem Element des Planetenradgetriebes und elektrischer Antriebsmaschine dabei solange angetrieben, bis das Netz und die elektrische Antriebsmaschine synchron sind, wobei im synchronen Zustand die elektrische Antriebsmaschine an ein Netz angeschlossen wird. In diesem Fall wird somit erst eine auf Nenndrehzahl bereits gebrachte Antriebsmaschine an das Netz angeschlossen, wodurch hohe Einschaltströme wie bei Anfahren unter Last vollständig vermieden werden.
Die elektrische Antriebsmaschine übernimmt die Last erst nachdem diese ihren Arbeitspunkt stabil erreicht hat.

Der Vorteil besteht darin, dass zum einen die Antriebsmaschine vollständig lastfrei in Betrieb nehmbar ist und auf Nenndrehzahl über die zweite Hilfsantriebseinrichtung wenigstens mittelbar angetrieben wird und erst bei Synchronisierung die Leistung an die Leistungsübertragungsvorrichtung überträgt. Eine separate Hilfsstartvorrichtung für die Antriebsmaschine kann entfallen. Auch kann der erforderliche Einschaltstrom für die elektrische Antriebsmaschine gering gehalten werden. Ferner ist die resultierende Turbinendrehzahl bei entleertem Wandler durch die Drehzahlen von erstem und drittem Element des Planetenrades begrenzt, so dass Schädigungen an der Lagerung dessen bedingt durch diese ausgeschlossen werden können.

Auch der Antrieb der zweiten Hilfsantriebseinrichtung wird dabei, wenn dieser nicht mehr benötigt wird, bei Antreiben des ersten Elementes über die Antriebsmaschine deaktiviert oder die zweite Hilfsantriebseinrichtung vom ersten Element des Planetenradgetriebes oder der Verbindung von erstem Element des Planetenradgetriebes und Antriebsmaschine entkoppelt.

Auch bei der zweiten grundlegenden Erweiterung des Grundverfahrens werden vorzugsweise erste und/oder zweite Hilfsantriebseinrichtungen entweder gesteuert zugeschalten und deaktiviert oder aber die Ankopplung erfolgt derart, dass zumindest ein Deaktivieren automatisiert möglich ist. Besonders bevorzugt sind die einzelnen Hilfsantriebseinrichtungen dazu über eine selbstsynchronisierende Schaltkupplung an die jeweiligen Elemente des Planetenradgetriebes angekoppelt. Bezüglich der ersten Hilfsantriebseinrichtung kann dabei auf die Ausführungen zur Einleitung des ersten Antriebsmomentes in das dritte Element des Planetengetriebes verwiesen werden.

Eine automatisierte Entkopplung der zweiten Hilfsantriebseinrichtung kann bei zumindest mittelbarer Kopplung dieser mit dem ersten Element des Planetengetriebes über eine selbstsynchronisierende Schaltkupplung realisiert werden, wenn diese derart ausgelegt und angeordnet ist, automatisch bei Umkehr des Leistungsflusses zum ersten Element, insbesondere Einleitung eines Antriebsmomentes über die elektrische Antriebsmaschine in das erste Element des Planetenradgetriebes anspricht und die zweite Hilfseinrichtung von diesem entkoppelt.

Unter einer selbstsynchronisierenden Schaltkupplung wird dabei insbesondere eine Kupplung zur Kopplung zweier Teile verstanden, bei welcher bei Drehrichtungsumkehr oder wenn die Drehzahl des eigentlich anzutreibenden Teils größer als die des treibenden Teils, die Verbindung selbsttätig gelöst wird.

Andere Ausführungen zur Entkoppelung der zweiten Hilfsantriebseinrichtung sind ebenfalls denkbar. Dazu können Einrichtungen zur wahlweisen Kopplung oder Entkoppelung der zweiten Hilfsantriebseinrichtung vom ersten Element des Planetengetriebes oder einem mit diesem wenigstens mittelbar verbundenen Element bzw. Einrichtungen zur wahlweisen Kopplung oder Entkoppelung der zweiten Hilfsantriebseinrichtung von der Verbindung zwischen erstem Element des Planetenradgetriebes und Antriebsmaschine vorgesehen werden. Als derartige Einrichtungen können schaltbare Kupplungen fungieren, deren Betätigung gesteuert erfolgt. Desweiteren kann bei Verwendung von Hilfsantriebseinrichtungen in Form von Rotordrehvorrichtungen mit Schwenkritzeln, eine Entkopplung durch Verschwenken des Ritzels und Außereingriffbringens dessen mit dem Gegenritzel erfolgen. Das Gegenritzel kann dabei insbesondere in der Verbindung zwischen dem ersten Element des Planetenradgetriebes und der Antriebsmaschine oder in einem mit dem ersten Element drehfest verbundenen Element angeordnet sein.

Bei allen vorgenannten Verfahrensschritten ist die Antriebsmaschine bei Durchführung des Verfahrens mechanisch mit dem ersten Element des Planetenradgetriebes verbunden.

Das erfindungsgemäße Grundverfahren des Startens bei entleertem hydrodynamischen Drehzahl-/Drehmomentwandler kann in unterschiedlichen Konfigurationen von Leistungsübertragungsvorrichtungen mit Wandler und nachgelagerten Überlagerungsgetriebe zum Einsatz gelangen. Die Grundkonfiguration ist in Anspruch 12 beschrieben. Entscheidend zur Umsetzung ist das Vorsehen einer Steuervorrichtung, welche zumindest Funktionskomponenten kommunizierend gekoppelt ist:
- Erfassungseinrichtungen zur Erfassung zumindest einer der nachfolgenden Größen
- einer einen Istwert der Betriebsweise der Antriebsmaschine wenigstens mittelbar beschreibenden Größe
- einer einen Istwert des Füllungszustandes des hydrodynamischen Drehzahl-/Drehmomentwandlers wenigstens mittelbar beschreibenden Größe;
und Stelleinrichtungen zur Ansteuerung der Einrichtungen zur Beeinflussung des Füllungszustandes des hydrodynamischen Drehzahl-/Drehmomentwandlers.
Bezüglich der Vorteile wird - um Wiederholungen zu vermeiden - auf die Ausführungen zum Verfahren verwiesen. Dies gilt auch für die nachfolgend aufgezeigten vorteilhaften Ausgestaltungen, welche zur Umsetzung der ersten Erweiterung und zweiten Erweiterung des Verfahrens erforderlich sind.

Die Verstellung zumindest einzelner Stellschaufeln und/oder verstellbarer Schaufelsegmente an den einzelnen Schaufelrädern - Pumpenrad und/oder Turbinenrad oder Leitrad - bietet den Vorteil der Regelbarkeit der Aufnahmeleistung und einer Vergrößerung des möglichen Betriebsbereiches des Wandlers innerhalb der Leistungsübertragungsvorrichtung.

In einer besonders vorteilhaften Grundausführung der Leistungsübertragungsvorrichtung ist der Wandler als Gegenlaufwandler ausgeführt. Es ergeben sich unterschiedliche Kopplungsmöglichkeiten mit dem Planetengetriebe. In einer besonders vorteilhaften konstruktiven Ausführung werden das erste Element des Planetengetriebes vom Planetenträger, das zweite Element des Planetengetriebes vom Sonnenrad und das dritte Element des Planetengetriebes vom Hohlrad des Planetengetriebes gebildet. Der Einsatz eines Gegenlaufwandlers erlaubt aufgrund seines konstruktiven Aufbaus einen sehr einfachen und kompakten Aufbau der Leistungsübertragungsvorrichtung selbst und der baulichen Integration der Stellvorrichtung. Der Aufbau, bei welchem das Hohlrad mit der Ausgangswelle direkt oder über ein weiteres Getriebe, vorzugsweise ein Stirnradgetriebe, verbunden ist und bei welchem der hydrodynamische Leistungszweig über das Sonnenrad eingetragen wird, hat dabei den entscheidenden Vorteil, dass das Planetengetriebe aufgrund der günstigen Drehzahlen sehr kompakt ausgeführt werden kann. Die Vorrichtung erhält so insgesamt einen sehr kompakten Aufbau, welcher auf eine Koppelhülse verzichten kann. Er kann außerdem auf zusätzliche Standgetriebe in Form von Planetengetrieben verzichten und kann so sehr klein, kompakt mit einer geringen Anzahl von Bauteilen und dementsprechend einfach und kostengünstig in der Herstellung und der Montage ausgeführt werden. Der Aufbau kann dabei gemäß einer vorteilhaften Weiterbildung mit genau einem Planetengetriebe ausgeführt sein, sodass auf weitere vergleichsweise aufwändige Planetengetriebe verzichtet werden kann.

Gemäß einer vorteilhaften Ausbildung ist es ferner vorgesehen, dass die Turbine des hydrodynamischen Gegenlaufwandlers über eine Hohlwelle mit dem Sonnenrad des Planetengetriebes verbunden ist und die durch die Hohlwelle verlaufende Eingangswelle auf der dem hydrodynamischen Gegenlaufwandler abgewandten Seite mit den Planetenträgern verbunden ist. Dies ermöglicht einen sehr kompakten Aufbau, welcher sich sehr platzsparend realisieren lässt. Die Hohlwelle gemäß diesem Aufbau ist dabei von vergleichsweise kleinem Durchmesser und bei weitem nicht so aufwendig und komplex, wie es beispielsweise die Koppelhülse beim Aufbau gemäß dem Stand der Technik ist

In einer alternativen Grundausführung ist der hydrodynamische Drehzahl-/Drehmomentwandler als Gleichlaufwandler ausgebildet. In diesem Fall laufen Pumpenrad und Turbinenrad gleichsinnig um.

Die Kopplungsmöglichkeiten mit dem Planetengetriebe ergeben sich wie folgt aus der Zuordnung der einzelnen Komponenten:
a. Das erste Element des Planetengetriebes wird vom Hohlrad, das zweite Element des Planetengetriebes vom Planetenträger und das dritte Element des Planetengetriebes vom Sonnenrad gebildet. Das Turbinenrad ist dann entweder direkt oder über ein Umkehrgetriebe mit dem Planetenträger verbunden.
b. Das erste Element des Planetengetriebes wird vom Hohlrad, das zweite Element des Planetengetriebes vom Sonnenrad und das dritte Element des Planetengetriebes vom Planetenträger gebildet.
c. Das erste Element des Planetengetriebes wird vom Sonnenrad, das zweite Element des Planetengetriebes vom Hohlrad und das dritte Element des Planetengetriebes vom Planetenträger gebildet.
d. Das erste Element des Planetengetriebes wird vom Sonnenrad, das zweite Element des Planetengetriebes vom Planetenträger und das dritte Element des Planetengetriebes vom Hohlrad gebildet.
e. Das erste Element des Planetengetriebes wird vom Planetenträger, das zweite Element des Planetengetriebes vom Hohlrad und das dritte Element des Planetengetriebes vom Sonnenrad gebildet.
f. Das erste Element des Planetengetriebes wird vom Planetenträger, das zweite Element des Planetengetriebes vom Sonnenrad und das dritte Element des Planetengetriebes vom Hohlrad gebildet.

Zur Realisierung der ersten Modifikation des Grundverfahrens ist erfindungsgemäß eine erste Hilfsantriebseinrichtung zum wenigstens mittelbaren Einleiten eines Antriebsmomentes in das dritte Element des Planetenradgetriebes vorgesehen. Die erste Hilfsantriebseinrichtung ist dazu derart angeordnet und ausgebildet, dass das Antriebsmoment entsprechend zumindest einer der nachfolgenden Möglichkeiten dem dritten Element des Planetengetriebes zugeführt wird:
- Einleitung des Antriebsmomentes direkt in das dritte Element des Planetenradgetriebes
- Einleitung des Antriebsmomentes in die Verbindung zwischen drittem Element des Planetenradgetriebes und Ausgang der Leistungsübertragungsvorrichtung
- Einleitung des Antriebsmomentes am Ausgang der Leistungsübertragungsvorrichtung
- Einleitung des Antriebsmomentes in die Verbindung zwischen Ausgang der Leistungsübertragungsvorrichtung und der Arbeitsmaschine
- Einleitung des Antriebsmomentes in eine mit dem dritten Element oder der Verbindung zwischen drittem Element des Planetenradgetriebes und Ausgang oder der Verbindung zwischen Ausgang und Arbeitsmaschine verbundene Drehzahl-/Drehmomentwandlungseinrichtung.

Ist in einer Konfiguration der Leistungsübertragungsvorrichtung dem Planetenradgetriebe ein Über- oder Untersetzungsgetriebe im Kraftfluss zwischen diesem und der Arbeitsmaschine nachgeordnet, wobei der Ausgang des Über- oder Untersetzungsgetriebes exzentrisch zum Planetengetriebe angeordnet ist, erfolgt die Anordnung der ersten Hilfsantriebseinrichtung vorzugsweise am ohnehin vorhandenen vom Planetenradgetriebe abgewandten freien Wellenende des Über- oder Untersetzungsgetriebes.

Auch die für die zweite Erweiterung des Verfahrens vorgesehene Hilfsantriebseinrichtung zum wenigstens mittelbaren Einleiten eines Antriebsmomentes in das erste Element des Planetenradgetriebes ist vorzugsweise derart angeordnet und ausgebildet, dass das Antriebsmoment entsprechend zumindest einer der nachfolgenden Möglichkeiten dem ersten Element des Planetengetriebes zugeführt wird:
- Einleitung des Antriebsmomentes direkt in das erste Element des Planetenradgetriebes
- Einleitung des Antriebsmomentes in die Verbindung zwischen erstem Element des Planetenradgetriebes und Eingang der Leistungsübertragungsvorrichtung.

Bezüglich der Ausbildung von erster und/oder zweiter Hilfsantriebseinrichtung besteht eine Mehrzahl von Möglichkeiten. Im einfachsten Fall werden diese von sogenannten Wellen- oder Rotordrehvorrichtungen gebildet. Bei diesen handelt es sich üblicherweise um zum Verdrehen großer Massen ausgebildete Einrichtungen, welche elektrisch, mechanisch, hydraulisch oder in eine Kombination aus diesen betrieben werden. Dazu kann auf standardisierte Ausbildungen zurückgegriffen werden. In alternativer Ausbildung ist der Einsatz von Antriebsmotoren möglich. Für den angestrebten Anwendungsfall eignet sich in besonders vorteilhafter Weise eine Rotordrehvorrichtung bestehend aus selbstsynchronisierender Schaltkupplung, Kegelradgetriebe und mittels Frequenzumrichter (optional) drehzahlgeregeltem Elektromotor, die auf der Hohlradwelle montiert wird. Alternativ dazu ist auch der Einsatz einer Rotordrehvorrichtung mit einem Schwenkritzel möglich.

Hilfsantriebseinrichtungen können ferner u.a. elektrische Maschinen, hydrostatische Antriebe oder elektrohydraulische Aggregate sein.

Je nach Anordnung der einzelnen Hilfsantriebseinrichtungen im Antriebsstrang kann es ausreichend sein, diese lediglich zu deaktivieren oder es ist eine zuverlässige Entkopplung beim Eintreten vordefinierter Ereignisse denkbar. In einer besonders vorteilhaften Ausführung ist die erste und/oder zweite Hilfsantriebseinrichtung vom Antriebsstrang entkoppelbar, vorzugsweise mechanisch entkoppelbar. Diese Entkoppelbarkeit kann in einer besonders vorteilhaften Weiterbildung durch die Kopplung mit dem Antriebsstrang über selbstsynchronisierende Schaltkupplung erfolgen. Diese bewirkt ein automatisches Auskoppeln bei vordefinierter Drehzahl oder Änderung der Drehrichtung bzw. Umkehr des Leistungsflusses.

In einer Weiterbildung ist der elektrischen Antriebsmaschine eine Hilfsstarteinrichtung zum Hochfahren zugeordnet, um ein Anfahren möglichst lastfrei zu gewährleisten. Hierzu können die gängigen Softstarter zum Einsatz gelangen, ferner separate Hilfsmotoren.

Die erfindungsgemäße Lösung wird nachfolgend anhand von Figuren erläutert. Darin ist im Einzelnen Folgendes dargestellt:
- Figur 1: zeigt beispielhaft den Grundaufbau eines nicht erfindungsgemäßen Antriebsstranges mit einer Leistungsübertragungsvorrichtung gemäß einer ersten Grundausführung;
- Figur 2: zeigt beispielhaft den Grundaufbau eines nicht erfindungsgemäßen Antriebsstranges mit einer Leistungsübertragungsvorrichtung gemäß einer zweiten besonders vorteilhaften Grundausführung;
- Figur 3: verdeutlicht anhand eines Flussdiagramms den grundlegenden Ablauf eines erfindungsgemäßen Verfahrens;
- Figur 4a: zeigt beispielhaft den Grundaufbau eines Antriebsstranges mit einer Leistungsübertragungsvorrichtung gemäß einer zweiten besonders vorteilhaften Grundausführung zur Durchführung des erfindungsgemäßen Verfahrens gemäß einer ersten grundlegenden Erweiterung;
- Figur 4b: zeigt anhand eines Flussdiagramms den Ablauf eines Verfahrens zum Betreiben des Antriebsstranges gemäß der ersten Erweiterung;
- Figur 5a: zeigt beispielhaft den Grundaufbau eines Antriebsstranges mit einer Leistungsübertragungsvorrichtung gemäß einer zweiten besonders vorteilhaften Grundausführung zur Durchführung des erfindungsgemäßen Verfahrens gemäß einer zweiten grundlegenden Erweiterung;
- Figur 5b: zeigt anhand eines Flussdiagramms den Ablauf eines Verfahrens zum Betreiben des Antriebsstranges gemäß der zweiten Erweiterung;
- Figur 6a: zeigt beispielhaft die mögliche Ausbildung einer ersten oder zweiten Hilfsantriebseinrichtung in Form einer Rotordrehvorrichtung mit Schwenkritzel;
- Figur 6b: zeigt beispielhaft die mögliche Ausbildung einer ersten oder zweiten Hilfsantriebseinrichtung in Form einer Rotordrehvorrichtung mit SSS-Kupplung.

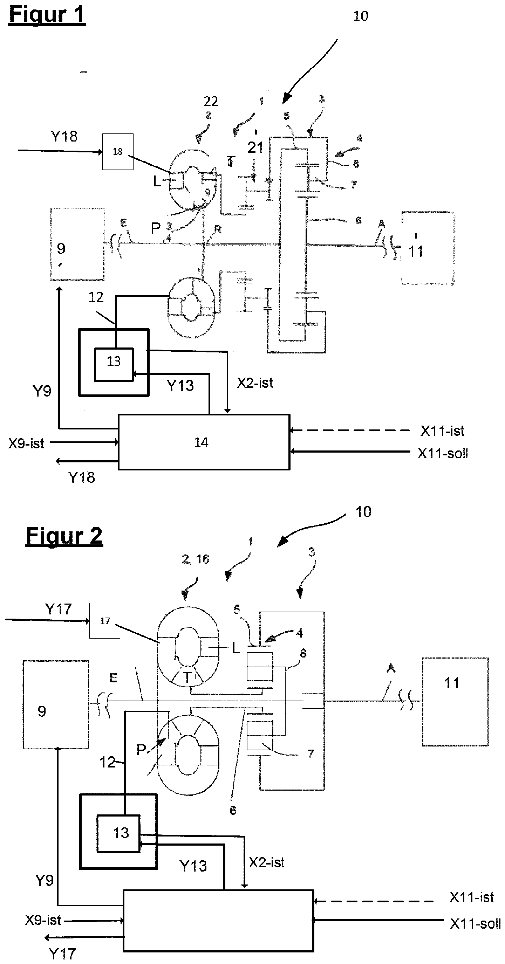

Die Figuren 1 und 2 verdeutlichen in schematisiert vereinfachter Darstellung den Grundaufbau zweier Antriebsstränge 10 zum Antreiben einer Arbeitsmaschine 11. Das Antriebsstrang 10 umfasst zumindest eine elektrische Antriebsmaschine 9, insbesondere in Form eines Elektromotors und eine Leistungsübertragungsvorrichtung 1 gemäß zweier Grundausführungen, bei welchen das Verfahren zum Anlaufen der Antriebsmaschine 9 bzw. Betreiben des Antriebsstranges 10 zum Einsatz gelangt. Die Leistungsübertragungsvorrichtung 1 ist im Kraftfluss zwischen Antriebsmaschine 9 und Arbeitsmaschine 11 angeordnet. Die Anordnung erfolgt vorzugsweise koaxial. Exzentrische Anordnungen sind bei entsprechender Ausgestaltung der Verbindungen zwischen den einzelnen Funktionskomponenten ebenfalls möglich. Die Figuren 1 und 2 zeigen beispielhaft Grundausführungen, welche hinsichtlich der Kopplung zwischen den einzelnen Komponenten sowie durch die Einbindung weiterer Zusatzaggregate modifiziert werden können.

Bei beiden Grundausführungen umfasst die Leistungsübertragungsvorrichtung 1 zumindest einen wenigstens mittelbar mit der Antriebsmaschine 9 verbundenen Eingang E und einen wenigstens mittelbar mit der Arbeitsmaschine 11 verbindbaren oder verbundenen Ausgang A, einen hydrodynamischen Drehzahl-/Drehmomentwandler, nachfolgend kurz hydrodynamischer Wandler 2 genannt und ein zumindest ein Planetenradgetriebe 4 umfassendes Überlagerungsgetriebe 3. Ein- und Ausgänge E, A sind vorzugsweise als Ein- und Ausgangswellen ausgebildet. Denkbar ist auch die Ausbildung in Form drehmomentübertragender Funktionsteile. Wenigstens mittelbar verbindbar oder verbunden bedeutet dabei entweder direkt oder über weitere zwischengeordnete Komponenten, wobei darunter auch Einrichtungen zur Drehzahl-/Drehmomentwandlung fallen können. Das Überlagerungsgetriebe 3 umfasst zumindest ein - in den dargestellten Ausführungen genau ein - Planetenradgetriebe 4 mit zumindest einem Hohlrad 5, einem Sonnenrad 6 und einem, die Planetenräder 7 tragenden Steg 8 als Elemente des Planetenradgetriebes 4. Die Planetenräder 7 sind drehbar am Steg 8 gelagert.

Der hydrodynamische Wandler 2 umfasst zumindest ein Pumpenrad P, ein Turbinenrad T und ein Leitrad L. Beide Grundausführungen sind dadurch charakterisiert, dass der Eingang E wenigstens mittelbar, vorzugsweise direkt mit dem Pumpenrad P und einem ersten Element des Planetenradgetriebes 4 verbunden ist, das Turbinenrad T wenigstens mittelbar, vorzugsweise direkt mit einem zweiten Element des Planetenradgetriebes 4 und der Ausgang A wenigstens mittelbar, vorzugsweise direkt mit einem dritten Element des Planetenradgetriebes 4 verbunden ist.

Der Wandler 2 gemäß einer ersten Grundausführung - wie in Figur 1 beispielhaft wiedergegeben- , ist als Gleichlaufwandler 22, insbesondere einphasiger Gleichlaufwandler ausgeführt. Pumpenrad P und das Turbinenrad T laufen gleichsinnig um. Denkbar sind auch einstufige und mehrstufige Ausführungen. Dabei können bei mehrstufiger Ausführung einzelne Hauptglieder des Wandlers 2, welche vom Pumpenrad P oder Turbinenrad T gebildet werden, aus mehreren Schaufelkränzen bestehen, zwischen denen ein Hauptglied oder ein Schaufelkranz eines anderen Hauptgliedes angeordnet ist.

In der in Figur 1 dargestellten Ausführung ist das Pumpenrad P wenigstens mittelbar drehfest mit dem ersten Element des Planetenradgetriebes 4 in Form des Hohlrades 5 gekoppelt. Die Kopplung erfolgt hier direkt. Desweiteren ist der Eingang E drehfest mit dem Pumpenrad P und dem Hohlrad 5 verbunden. Vorzugsweise erfolgt dazu die Kopplung von Hohlrad 5 und Pumpenrad P mit einer den Eingang E bildenden Welle. Das Turbinenrad T ist wenigstens mittelbar mit dem Steg 8 verbunden. Die Verbindung erfolgt hier über eine Umkehrstufe 21, insbesondere ein Zwischenrad. Hydrodynamischer Wandler 2 und Planetenradgetriebe 4 sind koaxial zueinander bezüglich einer Rotationsachse R angeordnet. Der Ausgang A ist mit dem Sonnenrad 6 verbunden. Dieser kann beispielhaft direkt von einer mit dem Sonnenrad 6 verbundenen oder integral ausgeführten Welle gebildet sein. Denkbar ist jedoch auch die hier nicht dargestellte Zwischenordnung weiterer Drehzahl-/Drehmomentwandlungseinrichtungen, wobei der Ausgang dann koaxial oder exzentrisch zum Eingang E angeordnet sein kann.

Die Figur 2 verdeutlicht eine zweite Grundausführung einer Leistungsübertragungsvorrichtung 1, bei welcher der Wandler 2 als Gegenlaufwandler 16 ausgeführt ist und die besonders für das Verfahren geeignet ist. Auch diese umfasst neben dem Wandler 2 ein Überlagerungsgetriebe 3, umfassend zumindest ein Planetenradgetriebe 4, hier genau ein Planetenradgetriebe 4. Hydrodynamischer Wandler 2 und Überlagerungsgetriebe 3 sind auch hier zwischen einem Eingang E, insbesondere Eingangswelle, die mit der Antriebsmaschine 9 wenigstens mittelbar, vorzugsweise direkt verbunden ist und einem Ausgang A, insbesondere einer Ausgangswelle, die mit der Arbeitsmaschine 11 wenigstens mittelbar, vorzugsweise direkt verbunden ist, angeordnet. Das Planetenradgetriebe 4 umfasst in Analogie zur Ausführung von Figur 1 zumindest ein Hohlrad 5, ein Sonnenrad 6, Planetenräder 7 und einen diese tragenden Planetenträger bzw. Steg 8. Der Gegenlaufwandler 16 ist dadurch charakterisiert, dass das Pumpenrad P und das Turbinenrad T gegensinnig umlaufen. Dabei kann das Turbinenrad T in axialer Richtung neben dem Pumpenrad P angeordnet sein. Denkbar sind auch Ausführungen mit radialer Anordnung. Desweiteren umfasst der Wandler 2 zumindest ein Leitrad L. Das Leitrad L ist vorzugsweise feststehend, kann jedoch auch drehbar gelagert sein oder stützt sich über einen Freilauf ab.

Die Anbindung an das Planetenradgetriebe 4 erfolgt hier derart, dass das Pumpenrad P des hydrodynamischen Wandlers 2 mit dem Steg 8 des Planetenradgetriebes 4 und dem Eingang E gekoppelt ist, während das Turbinenrad T mit dem Sonnenrad 6 des Planetenradgetriebes wenigstens mittelbar, vorzugsweise direkt gekoppelt ist.

Bei beiden Wandlerausbildungen 16 oder 22 kann dieser mit verstellbaren Schaufeln oder Schaufelsegmenten an zumindest einem der Schaufelräder - Pumpenrad P, Turbinenrad T oder Leitrad L ausgeführt sein, um das Übertragungsverhalten, insbesondere Leistungsübertragungsverhalten sowie Drehzahl zu beeinflussen und zu steuern. In Figur 1 ist beispielhaft das Leitrad L mit einer Stelleinrichtung 18 zur Verstellung einzelner Schaufeln oder Schaufelsegmente wiedergegeben. In Figur 2 ist beispielhaft ein Wandler mit besonders vorteilhafter Pumpenschaufelverstellung wiedergegeben. Die Stelleinrichtung ist mit 17 bezeichnet. Die entsprechenden Stellsignale Y18 bzw. Y17 werden von der Steuervorrichtung 14 ausgegeben. Es versteht sich, dass die dargestellten Möglichkeiten der Verstellbarkeit von Beschaufelungsbestandteilen beispielhaft sind und auch andere Schaufelräder jeweils mit Verstellschaufeln ausgestattet sein können.

Bei der Ausbildung gemäß Figur 2 wird ferner der Eingang E bzw. die diesen bildende oder mit diesem gekoppelte Welle wird dabei durch die als Hohlwelle ausgebildete Verbindungswelle zwischen Turbinenrad T und zweitem Element des Planetenradgetriebes 4, hier dem Sonnenrad 6 geführt.

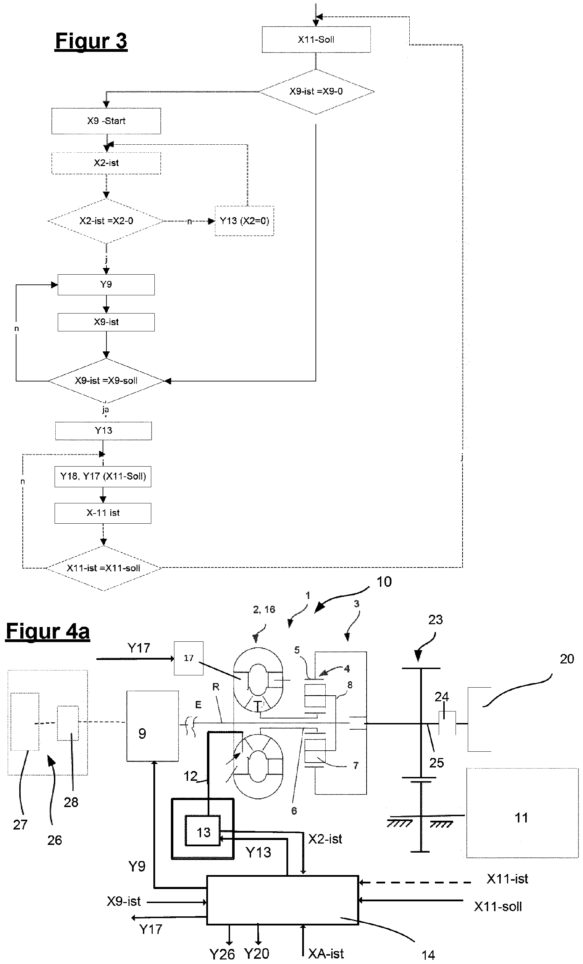

Erfindungsgemäß ist vorgesehen, dass in beiden Grundausführungen der hydrodynamische Wandler 2 beim Hochfahren der Antriebsmaschine 9, insbesondere Hochfahren des Elektromotors entleert ist. Der von den Schaufelrädern begrenzte Arbeitsraum ist dabei in einem Zeitraum, welcher durch die Inbetriebnahme der Antriebsmaschine 9 charakterisiert ist bis zum Erreichen einer vordefinierten Drehzahl der Antriebsmaschine 9, vorzugsweise der Nenndrehzahl dieser entleert. Aufgrund der hohen Massenträgheiten und des Losbrechmomentes der Arbeitsmaschine 11 entsteht ein Widerstandsmoment an der Abtriebsseite d.h. am Ausgang A, wodurch dieser stehen bleibt. An- und Abtrieb, d.h. Eingang E und Ausgang A sind voneinander entkoppelt. Die Antriebsmaschine 9 muss lediglich das erste Element des Planetenradgetriebes 4 und das mit dem Eingang gekoppelte Pumpenrad P beschleunigen. Am Turbinenrad T stellt sich bedingt durch die Übersetzung des Planetenradgetriebes bei stehendem drittem Element eine resultierende Drehzahl ein. Bei Erreichen der vordefinierten Drehzahl der Antriebsmaschine 9, insbesondere Nenndrehzahl wird der Wandler 2 befüllt und der Abtrieb, d.h. Ausgang A beschleunigt. Das Übertragungsverhalten des Wandlers 2 wird beispielsweise über die Verstellschaufeln gesteuert. Die Grundverfahrensschritte des erfindungsgemäßen Verfahrens sind in Figur 3 anhand eines Flussdiagramms zur Steuerung eines Antriebsstranges 10 zum Antrieb einer Arbeitsmaschine 11 wiedergegeben.
Zur vorrichtungsmäßigen Umsetzung des Verfahrens ist dem Antriebsstrang 10 zumindest ein wenigstens dem Wandler 2 zugeordnetes Betriebsmittelversorgungs- und/oder Führungssystem 12, eine Einrichtung 13 zur Beeinflussung des Füllungszustandes des Wandlers 2 sowie eine Steuervorrichtung 14 zugordnet. Bei dem dem Wandler 2 zugeordneten Betriebsmittelversorgungs-und/oder Führungssystem 12 kann es sich um ein separates und nur dem Wandler 2 zugordnetes System handeln, welches optional auch Zusatzfunktionen übernehmen kann, wie beispielsweise die Versorgung der Lager mit Schmiermittel. Vorzugsweise ist das Betriebsmittelversorgungs- und/oder Führungssystem 12 Bestandteil eines zentralen Versorgungssystems der Leistungsübertragungsvorrichtung 1 für Schmiermittel. Die Einrichtung 13 zur Beeinflussung des Füllungszustandes bzw. Füllungsgrades umfasst Mittel zur Befüllung/Entleerung, vorzugsweise in Form von Ventileinrichtungen im Zu- und Ablauf des Wandlers 2. Bei der Steuervorrichtung 14 kann es sich beispielhaft um eine der Leistungsübertragungsvorrichtung 1 zugeordnete Steuervorrichtung handeln. Denkbar ist auch eine dem Antriebsstrang 10 oder dem gesamten Strang aus Antriebsstrang 10 und Arbeitsmaschine 11 zugeordnete Steuervorrichtung.

Das Grundverfahren ist durch folgende Verfahrensschritte charakterisiert:
- Hochfahren der elektrischen Antriebsmaschine (9) aus dem Stillstand bei entleertem hydrodynamischen Drehzahl-/Drehmomentwandler (2, 16, 22) bis zum Erreichen einer vordefinierten, die Betriebsweise der Antriebsmaschine (9) wenigstens mittelbar charakterisierenden Größe, insbesondere der Nenndrehzahl dieser
- zeitgleich zum Erreichen der vordefinierten, die Betriebsweise der Antriebsmaschine (9) wenigstens mittelbar charakterisierenden Größe, insbesondere der Nenndrehzahl oder zeitlich versetzt nach Erreichen dieser Befüllung des hydrodynamischen Drehzahl-/Drehmomentwandlers und Antreiben des Turbinenrades
- Antreiben des dritten Elementes des Planetenradgetriebes (4) mit einer Drehzahl, welche aus einer durch das Planetenradgetriebe (4) definierten Überlagerung der Drehzahl des mit der elektrischen Antriebsmaschine (9) verbundenen ersten Elementes des Planetenradgetriebes (4) und der Drehzahl des mit dem Turbinenrad (T) wenigstens mittelbar verbundenen zweiten Elementes des Planetengetriebes (4) resultiert.

Wird beispielsweise an einer Arbeitsmaschine 11 ein vordefiniertes Leistungsabgabeverhalten, insbesondere vordefinierte Drehzahl gefordert, was durch eine Sollwertvorgabe X11-soll für eine die Betriebsweise der Arbeitsmaschine 11 wenigstens mittelbar charakterisierende Größe erfolgen kann und ist die Antriebsmaschine 9 nicht in Betrieb, d.h. der Istwert X9-ist einer die Betriebsweise der Antriebsmaschine 9 wenigstens mittelbar charakterisierenden Größe entspricht X9-0 und beschreibt den Zustand "Antriebsmaschine 9 Aus", kann in Abhängigkeit der Ausbildung des Wandlers und dessen Ablaufs eine Überprüfung des Füllungszustandes erforderlich sein oder diese ist nicht erforderlich, da der Wandler 2 bei Außerbetriebnahme automatisch entleert wird. Daher ist der Verfahrensschritt der Überprüfung im Flussdiagramm nur mittels unterbrochener Linie wiedergegeben. Vorzugsweise wird aus Gründen der Gewährleistung einer optimalen Funktionalität eine derartige Überprüfung empfohlen. Zur Überprüfung des Füllzustandes des Wandlers 2 wird beispielsweise eine den Füllzustand des Wandlers 2 wenigstens mittelbar beschreibenden Größe X2-ist erfasst. Beschreibt X2-ist einen Zustand, in welchem der Arbeitsraum des Wandlers 2 befüllt ist, wird dieser entleert. Entspricht X2-ist X2-0 ist der Wandler 2 entleert. Die Ansteuerung einer Stelleinrichtung 13 des Wandlers zur Entleerung erfolgt durch Bestimmung einer Stellgröße Y13, insbesondere Y13 (X2=0) zur Entleerung des Wandlers 2. Ist der Wandler 2 entleert kann zeitgleich mit der vollständigen Entleerung oder zeitlich versetzt, beispielsweise durch Vorgabe einer vordefinierten Wartezeit, beispielsweise von einigen Sekunden, die Antriebsmaschine 9 in Betrieb genommen werden. Dies erfolgt durch entsprechende Vorgabe, beispielsweise einer Stellgröße Y9 zur Einstellung einer gewünschten Betriebsweise der Antriebsmaschine 9 wenigstens mittelbar charakterisierenden Größe X9-soll. Bei dieser kann es sich um die Einstellung der Nenndrehzahl handeln. Ist diese erreicht, wird ein Stellsignal Y13 zur Befüllung des Wandlers 2 und Steuerung des Übertragungsverhaltens Y18 (X11-soll) oder Y17 (X11-soll) zur Einstellung der die Betriebsweise der Arbeitsmaschine 11 wenigstens mittelbar charakterisierenden Größe ausgegeben und die Einrichtung 13 zur Beeinflussung des Füllungszustandes des Wandlers 2 sowie die Einrichtungen 18 bzw. 17 angesteuert. Der Wandler 2 ermöglicht entsprechend des Befüllungszustandes und der Schaufelstellung eine Leistungsübertragung über diesen. Die Drehzahl am Ausgang der Leistungssübertragungsvorrichtung 1 wird dabei durch die Schaufelstellung beeinflusst.

Soll eine den Betrieb der Arbeitsmaschine 11 wenigstens mittelbar charakterisierende Größe X11-ist eingeregelt werden, ist zusätzlich ein stetiger Abgleich mit dem gewünschten Sollwert X11-soll vorgesehen, welcher durch Änderung der Stellgröße Y18 bzw. Y17 über den Wandler 2 eingestellt wird. Die Regelung ist optional und daher mittels unterbrochener Linie wiedergegeben.

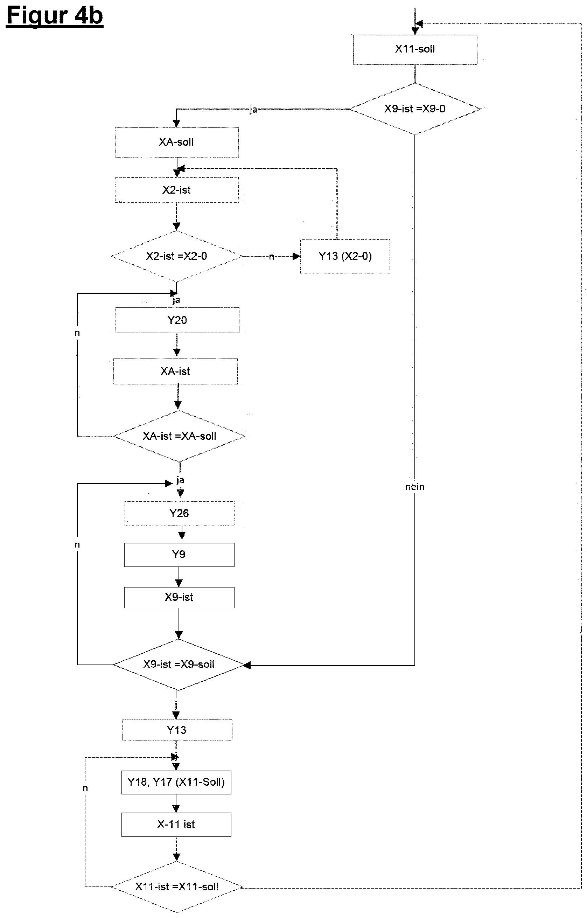

Die Figuren 1 bis 3 verdeutlichen Grundkonfigurationen der Antriebsstränge 10 und des Verfahrens. Um die sich bei diesen ergebenden sehr hohen Drehzahlen am Turbinenrad T während des Startvorganges der Antriebsmaschine 9 zu reduzieren ist es in einer vorteilhaften Erweiterung des Grundverfahrens für die zweite Grundkonfiguration gemäß Figur 2 in Figur 4 vorgesehen, den Abtrieb, d.h. das dritte Element des Planetenradgetriebes 4 vor dem Zuschalten der Antriebsmaschine 9 zu beschleunigen. Dazu ist eine Einrichtung zum wenigstens mittelbaren Einleiten eines Antriebsmomentes, insbesondere eine erste Hilfsantriebseinrichtung 20 am dritten Element, hier am Hohlrad 5 des Planetenradgetriebes 4 in Kraftflussrichtung von der Arbeitsmaschine 11 in Richtung Leistungsübertragungsvorrichtung 1 betrachtet vorgesehen. Die Hilfsantriebseinrichtung 20 kann vielgestaltig ausgeführt sein. Vorzugsweise ist diese als Wellendreheinrichtung oder auch Rotordrehvorrichtung genannt, ausgebildet.

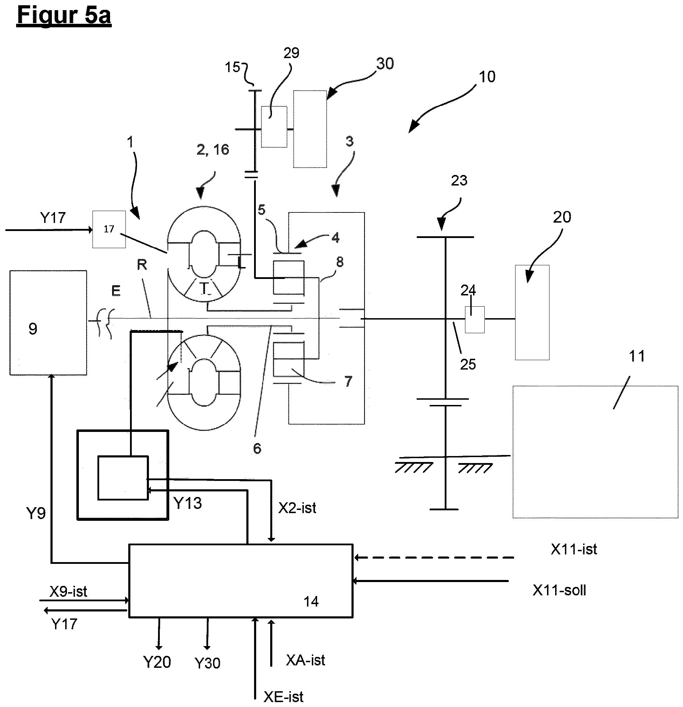

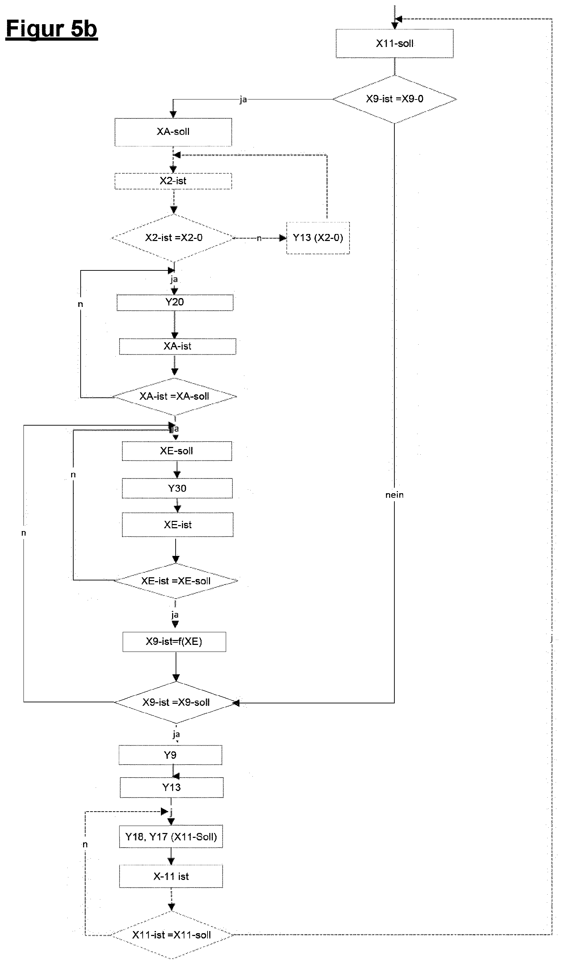

Im dargestellten Fall umfasst die Leistungsübertragungsvorrichtung 1 eine dem Planetenradgetriebe 4 nachgeordnete Drehzahl-/Drehmomentwandlungseinrichtung 23, insbesondere in Form eines Stirnradgetriebes, wobei der mit der Arbeitsmaschine 11 koppelbare Ausgang A exzentrisch zum Eingang E angeordnet ist. D.h. die Arbeitsmaschine 11 ist ebenfalls exzentrisch zum Eingang E angeordnet. Das Stirnradgetriebe umfasst hier beispielhaft einen Stirnradsatz mit einer Übersetzung ins Schnelle im Kraftfluss vom dritten Element des Planetenradgetriebes 4 betrachtet zur Arbeitsmaschine 11. Die Hilfsantriebseinrichtung 20 ist über eine selbstsynchronisierende Schaltkupplung 24, insbesondere SSS-Kupplung mit dem dritten Element des Planetenradgetriebes 4 verbunden. Im dargestellten Fall erfolgt die Anordnung der Hilfsantriebseinrichtung 20 bzw. das Einleiten des Antriebsmomentes am dritten Element des Planetenradgetriebes 4 über das freie und mit dem dritten Element verbundene und koaxial angeordnete Wellenende der Drehzahl/Drehmomentwandlungseinrichtung 23, insbesondere des Stirnradsatzes. Dieses ist mit 25 bezeichnet. Bei Vorliegen eines Signals zur Einstellung eines gewünschten vordefinierten Betriebszustandes der Arbeitsmaschine 11 wird daher das in Figur 5 dargestellte Verfahren analog zu dem in Figur 3 beschriebenen durchgeführt, wobei dem Starten der Antriebsmaschine 9 jedoch noch einige Verfahrensschritte vorgelagert sind. Auch hier wird, wie in Figur 3 bereits erläutert, bei Vorliegen eines Sollwertes X11-soll für ein an einer Arbeitsmaschine 11 ein vordefiniertes Leistungsabgabeverhalten, insbesondere vordefinierte Drehzahl, eine Überprüfung durchgeführt, ob die Antriebsmaschine 9 bereits in Betrieb ist oder aber aus dem Stillstand bei Vorliegen eines Signals zur Inbetriebnahme des Antriebsstranges 10 eine Prüfung des Füllzustandes des Wandlers 2, beispielsweise durch Erfassung einer den Füllzustand des Wandlers 2 wenigstens mittelbar beschreibenden Größe X2-ist. Beschreibt X2-ist einen Zustand, in welchem der Arbeitsraum des Wandlers 2 befüllt ist, wird dieser entleert. Die Ansteuerung einer Stelleinrichtung 13 des Wandlers erfolgt durch Bestimmung einer Stellgröße Y13, insbesondere Y2 (X2=0) zur Entleerung des Wandlers 2. Ist der Wandler 2 entleert kann zeitgleich mit der vollständigen Entleerung oder zeitlich versetzt, beispielsweise durch Vorgabe einer vordefinierten Wartezeit, (beispielsweise einige Sekunden), bei noch deaktivierter Antriebsmaschine 9 die Hilfsantriebseinrichtung 20 zum wenigstens mittelbaren Einleiten eines Antriebsmomentes am Ausgang A der Leistungsübertragungsvorrichtung 1 aktiviert werden. Vorzugsweise erfolgt die Einleitung des Antriebsmomentes an einem direkt mit dem dritten Element des Planetenradgetriebes 4 gekoppelten Element, um dieses von der Abtriebsseite her anzutreiben. Dazu wird eine Stelleinrichtung der Hilfsantriebseinrichtung 20 angesteuert, indem eine Stellgröße Y20 ermittelt wird. Die Stelleinrichtung dient der Einstellung der geforderten Betriebsweise der Hilfsantriebseinrichtung 20 zur Einleitung des Antriebsmomentes. Der Antrieb erfolgt bis zu einer vordefinierten, die Betriebsweise des dritten Elementes bzw. des Ausgangs A wenigstens mittelbar beschreibenden Größe XA-soll, vorzugsweise einer vordefinierten Auslegungsdrehzahl an diesem bei stehender Antriebsmaschine 9. Ist die vordefinierte Auslegungsgröße XA-soll erreicht, wird die Antriebsmaschine 9 gestartet. Der Startvorgang erfolgt vorzugsweise nicht durch direktes Starten der Antriebsmaschine 9 sondern über eine Hilfsstartvorrichtung 25, welche der Antriebsmaschine 9 zugeordnet ist. Diese umfasst im Fall der Ausbildung der Antriebsmaschine 9 als Elektromotor vorzugsweise einen elektrischen Hilfsmotor 26 und einen in der Verbindung zur Hauptantriebsmaschine 9 angeordneten Wandler 27, über welchen ein Hochfahren der Antriebsmaschine 9 erfolgt.
Durch den Antrieb der Abtriebsseite sowie des Einganges E und damit verbunden der Antrieb von Hohlrad 5 und Steg 8 ergibt sich bei entleertem Wandler eine resultierende Drehzahl am Turbinenrad T, welche allerdings durch die Drehzahlen von erstem und dritten Element des Planetenradgetriebes 4 begrenzt ist. Bei Erreichen einer die Betriebsweise der Antriebsmaschine 9 wenigstens mittelbar charakterisierenden Größe X9-ist gleich X9-soll, insbesondere der Nenndrehzahl, wird der Wandler 2 durch Vorgabe von Y13 zugeschalten und mit zunehmender Leistungsübertragung über den Wandler wird das Turbinenrad T und damit das mit diesem verbundene Element des Planetenradgetriebes 4 beschleunigt. Der Leistungsfluss dreht sich um, und der Abtrieb, insbesondere Ausgang A wird zunehmend über die Antriebsmaschine 9 angetrieben. Die selbstsynchronisierende Schaltkupplung 24 entkoppelt und die Arbeitsmaschine 11 wird über die Leistungsübertragungsvorrichtung 1 angetrieben.

Figur 5a zeigt eine Weiterbildung einer Ausführung gemäß Figur 4a. Figur 5b verdeutlicht eine zweite grundlegende Modifikation des erfindungsgemäßen Verfahrens und nutzt Verfahrensschritte gemäß Figur 5a.

Die Ausbildung gemäß Figur 5a weist eine weitere Hilfsantriebseinrichtung 30 zum Einleiten eines Antriebsmomentes auf. Diese ist der Antriebswelle, insbesondere einem mit dem Eingang E verbundenen Element zugeordnet. Die Zuordnung erfolgt vorzugsweise direkt zum ersten Element des Planetenradgetriebes 4, hier dem Steg 8. Dazu ist dieser auf seiner, dem Wandler 2 zugewandten Seite verlängert ausgeführt. Der Steg 8 erstreckt sich in Richtung des Wandlers 2 mit freien Endbereichen zur Kopplung mit der Hilfsantriebseinrichtung 30 zur Einleitung eines Antriebsmomentes. Die Kopplung erfolgt vorzugsweise auch hier über ein Drehzahl-/Drehmomenteinrichtung 15, welche von einer Außenverzahnung des Steges 8 und einem mit dieser in Eingriff stehenden Stirnrad gebildet wird. Mit einem freien Wellenende des Stirnrades ist die Hilfsantriebseinrichtung 30 gekoppelt. Die Kopplung erfolgt auch hier vorzugsweise über eine selbstsynchronisierende Schaltkupplung 29.

Das Verfahren zum Betreiben gestaltet sich wie in Figur 4b wiedergegeben. Allerdings wird zeitgleich oder mit zeitlichem Versatz zum Antrieb des dritten Elementes, d.h. Hohlrades 5 des Planetenradgetriebes 4 das erste Element des Planetenradgetriebes 4 in Form des Planetenträgers 8 bzw. Steges oder die Verbindung zwischen Steg und elektrischer Antriebsmaschine 9 über eine zweite Hilfsantriebseinrichtung 30 wenigstens mittelbar, vorzugsweise direkt angetrieben bis eine Solldrehzahl am Eingang E XE-soll, welche vorzugsweise der Nenndrehzahl der Antriebsmaschine 9 bei direkter Kopplung mit dieser entspricht, erreicht ist. Sind zwischengeordnete Übertragungsvorrichtungen mit Übersetzung vorgesehen, sind diese zu berücksichtigen. Die Antriebswelle der elektrischen Antriebsmaschine 9 wird durch deren Kopplung ebenfalls angetrieben und zwar solange bis das Netz und die elektrische Antriebsmaschine 9 synchron sind, wobei im synchronen Zustand die elektrische Antriebsmaschine 9 an ein Netz angeschlossen wird.

Die Ausbildung der Hilfsantriebseinrichtungen 20 und 30 als Rotordrehvorrichtungen und die Einrichtungen zur Entkopplung/Kopplung mit den jeweiligen Elementen des Planetenradgetriebes in Form von SSS-Kupplungen stellen jeweils besonders vorteilhafte Ausgestaltungen dar. Die erfindungsgemäße Lösung ist jedoch nicht darauf beschränkt. Denkbar ist auch der Einsatz anderer Hilfsantriebseinrichtungen, wie beispielweise elektrische Antriebsmaschinen, hydrostatische Antriebe etc.

Möglich ist auch der Ersatz der SSS-Kupplungen durch schaltbare Kupplungseinrichtungen, die jedoch entsprechend angesteuert werden müssten.

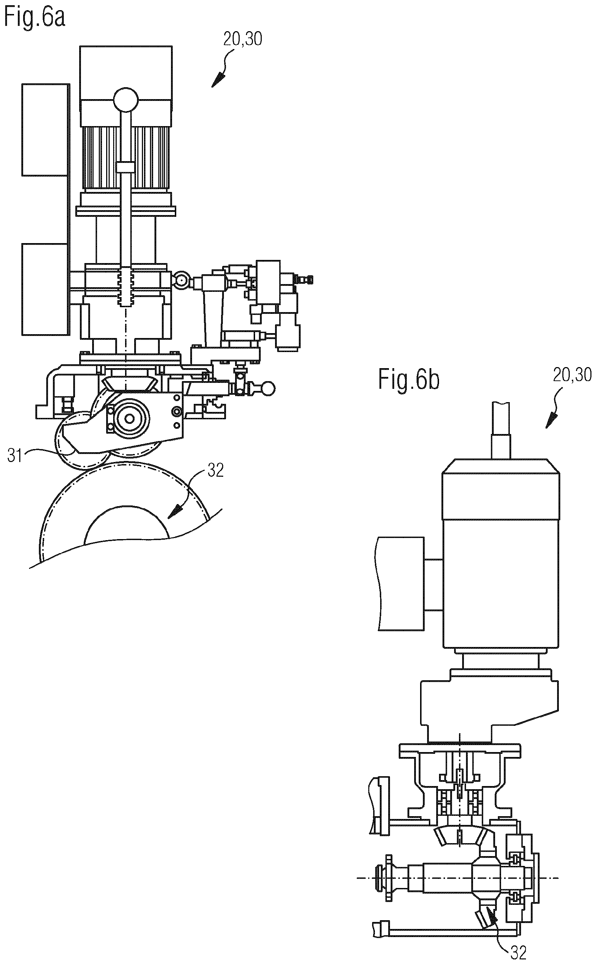

Desweiteren können die Hilfsantriebseinrichtungen 20 und/oder 30 auch als Rotordrehvorrichtung mit Schwenkritzel - wie in Figur 6a beispielhaft wiedergegeben - ausgebildet sein. In diesem Fall erfolgt die Entkopplung/Kopplung über das Verschwenken eines Schwenkritzels 31. Dieses wird in der gekoppelten Stellung mit einem Ritzel 32 verbunden. Das Ritzel 32 ist dabei bei der Ausbildung der Hilfsantriebseinrichtung 20 als Rotordrehvorrichtung mit Schwenkritzel in der Verbindung zwischen Arbeitsmaschine 11 und drittem Element des Planetenradgetriebes 4 angeordnet bzw. an einem verlängerten Ende des dritten Elementes. Das Ritzel 32 ist bei der Ausbildung der Hilfsantriebseinrichtung 30 als Rotordrehvorrichtung mit Schwenkritzel in der Verbindung zwischen erstem Element des Planetenradgetriebes 4 und Antriebsmaschine 9 oder an einem mit dem ersten Element verbundenen Element angeordnet . Der Antrieb des Ritzels 31 kann beispielsweise elektrisch oder elektrohydraulisch erfolgen. Das Verschwenken erfolgt gesteuert.

Figur 6b zeigt beispielhaft die mögliche Ausbildung einer ersten und/oder zweiten Hilfsantriebseinrichtung 20/30 in Form einer Rotordrehvorrichtung mit SSS-Kupplung 24 bzw. 29. Auch hier umfasst diese ein mit einem Zahnrad oder Ritzel 31 im Antriebsstrang in Eingriff stehendes Ritzel 32. Die Kopplung/Entkopplung im Sinne einer drehmomentübertragenden Verbindung erfolgt jedoch über die SSS-Kupplung 24 bzw. 29.

Für die Ausbildung der Rotordrehvorrichtung kann auf bekannte Systeme zurückgegriffen werden. Bezüglich möglicher Ausführungen kann beispielsweise auf EP2161416B1; US3960028A; DE7404122U verwiesen werden.

### Bezugszeichenliste

- 1: Leistungsübertragungsvorrichtung
- 2: hydrodynamischer Drehzahl-/Drehmomentwandler
- 3: Überlagerungsgetriebe
- 4: Planetenradgetriebe
- 5: Hohlrad
- 6: Sonnenrad
- 7: Planetenräder
- 8: Steg, Planetenträger
- 9: Antriebsmaschine, insbesondere Elektromotor
- 10: Antriebsstrang
- 11: Arbeitsmaschine
- 12: Betriebsmittelversorgungs-/Führungssystem
- 13: Einrichtung zur Befüllung und Entleerung
- 14: Steuervorrichtung
- 15: Drehzahl-/Drehmomentwandlungseinrichtung
- 16: Gegenlaufwandler
- 17: Stelleinrichtung
- 18: Stelleinrichtung
- 19:
- 20: erste Hilfsantriebseinrichtung, insbesondere Rotordrehvorrichtung
- 21: Umkehrstufe
- 22: Gleichlaufwandler
- 23: Drehzahl-/Drehmomentwandlungseinrichtung, insbesondere Stirnradstufe
- 24: selbstsynchronisierende Schaltkupplung
- 25: freies Wellenende
- 26: Hilfsstarteinrichtung
- 27: Hilfsmotor
- 28: Wandler
- 29: selbstsynchronisierende Schaltkupplung
- 30: zweite Hilfsantriebseinrichtung, insbesondere Rotordrehvorrichtung
- 31: Ritzel
- 32: Ritzel
- A: Ausgang, Ausgangswelle
- E: Eingang, Eingangswelle
- P: Pumpenrad (Wandler)
- T: Turbinenrad (Wandler)
- L: Leitrad

## Patentansprüche

1. Verfahren zum Betreiben eines Antriebsstranges zum drehzahlvariablen Antreiben einer Arbeitsmaschine (11) mit einer mit konstanter Drehzahl betreibbaren elektrischen Antriebsmaschine und einer Leistungsübertragungsvorrichtung (1), wobei die Leistungsübertragungsvorrichtung (1) zumindest umfasst:
- einen Eingang (E) zum wenigstens mittelbaren Verbinden mit der Antriebsmaschine (9);
- einen Ausgang (A) zum wenigstens mittelbaren Verbinden mit der Arbeitsmaschine (11);
- einen hydrodynamischen Drehzahl-/Drehmomentwandler (2, 16, 22) mit zumindest einem Pumpenschaufelrad (P), einem Turbinenschaufelrad (T) und einem Leitrad (L), welche einen mit Betriebsmittel befüllbaren Arbeitsraum bilden,
- ein Überlagerungsgetriebe (3) mit zumindest einem Planetenradgetriebe (4), umfassend ein Hohlrad (5), ein Sonnenrad (6) sowie einen Planetenträger (8) mit mehreren Planeten (7) als Elemente des Planetenradgetriebes (4), wobei
der Eingang (E) der Leistungsübertragungsvorrichtung (1) mit dem Pumpenrad (P) des hydrodynamischen Drehzahl-/Drehmomentwandlers (2, 16, 22) und einem ersten Element des Planetenradgetriebes (4) wenigstens mittelbar, vorzugsweise direkt verbunden ist, das Turbinenrad (T) des hydrodynamischen Drehzahl-/Drehmomentwandlers (2, 16, 22) mit einem zweiten Element des Planetenradgetriebes wenigstens mittelbar verbunden ist und ein drittes Element des Planetenradgetriebes (4) wenigstens mittelbar mit dem Ausgang (A) der Leistungsübertragungsvorrichtung (1) verbunden ist oder diesen bildet;
mit einem zumindest dem hydrodynamischen Drehzahl-/Drehmomentwandler (2, 16, 22) zugeordneten Betriebmittelversorgungs- und/oder Führungssystem (12) und einer Einrichtung (13) zur Beeinflussung des Füllungszustandes des hydrodynamischen Drehzahl-/Drehmomentwandlers (2, 16, 22);
**wobei das Verfahren folgende Schritte umfasst:**
- Hochfahren der elektrischen Antriebsmaschine (9) aus dem Stillstand bei entleertem hydrodynamischen Drehzahl-/Drehmomentwandler (2, 16, 22) bis zum Erreichen einer, die Nenndrehzahl der Antriebsmaschine (9) wenigstens mittelbar charakterisierenden Größe
- zeitgleich zum Erreichen der die Nenndrehzahl der Antriebsmaschine (9) wenigstens mittelbar charakterisierenden Größe oder zeitlich versetzt nach Erreichen dieser Befüllung des hydrodynamischen Drehzahl-/Drehmomentwandlers und Antreiben des Turbinenrades
- Antreiben des dritten Elementes des Planetenradgetriebes mit einer Drehzahl, welche aus einer durch das Planetenradgetriebe definierten Überlagerung der Drehzahl des mit der elektrischen Antriebsmaschine verbundenen ersten Elementes des Planetenradgetriebes und der Drehzahl des mit dem Turbinenrad wenigstens mittelbar verbundenen zweiten Elementes des Planetengetriebes resultiert;
wobei
- bei stehender elektrischer Antriebsmaschine (9) und entleertem hydrodynamischen Drehzahl-/Drehmomentwandler (2, 16, 22) das dritte Element des Planetenradgetriebes (4) über eine erste Hilfsantriebseinrichtung (20) wenigstens mittelbar, vorzugsweise direkt angetrieben wird;
- zeitgleich dazu oder mit zeitlichem Versatz zur Einstellung einer vordefinierten Drehzahl des dritten Elementes des Planetenradgetriebes (4) die elektrische Antriebsmaschine (9) hochgefahren wird und die erste Hilfsantriebseinrichtung (20) bei Umkehrung des Kraftflusses zum dritten Element des Planetenradgetriebes durch Antrieb des zweiten Elementes des Planetenradgetriebes (4) bei befülltem hydrodynamischen Drehzahl-/Drehmomentwandler (2, 16, 22) durch das Turbinenrad (T) vom dritten Element des Planetenradgetriebes entkoppelt wird.

2. Verfahren zum Betreiben eines Antriebsstranges zum drehzahlvariablen Antreiben einer Arbeitsmaschine (11) mit einer mit konstanter Drehzahl betreibbaren elektrischen Antriebsmaschine und einer Leistungsübertragungsvorrichtung (1), wobei die Leistungsübertragungsvorrichtung (1) zumindest umfasst:
- einen Eingang (E) zum wenigstens mittelbaren Verbinden mit der Antriebsmaschine (9);
- einen Ausgang (A) zum wenigstens mittelbaren Verbinden mit der Arbeitsmaschine (11);
- einen hydrodynamischen Drehzahl-/Drehmomentwandler (2, 16, 22) mit zumindest einem Pumpenschaufelrad (P), einem Turbinenschaufelrad (T) und einem Leitrad (L), welche einen mit Betriebsmittel befüllbaren Arbeitsraum bilden,
- ein Überlagerungsgetriebe (3) mit zumindest einem Planetenradgetriebe (4), umfassend ein Hohlrad (5), ein Sonnenrad (6) sowie einen Planetenträger (8) mit mehreren Planeten (7) als Elemente des Planetenradgetriebes (4), wobei
der Eingang (E) der Leistungsübertragungsvorrichtung (1) mit dem Pumpenrad (P) des hydrodynamischen Drehzahl-/Drehmomentwandlers (2, 16, 22) und einem ersten Element des Planetenradgetriebes (4) wenigstens mittelbar, vorzugsweise direkt verbunden ist, das Turbinenrad (T) des hydrodynamischen Drehzahl-/Drehmomentwandlers (2, 16, 22) mit einem zweiten Element des Planetenradgetriebes wenigstens mittelbar verbunden ist und ein drittes Element des Planetenradgetriebes (4) wenigstens mittelbar mit dem Ausgang (A) der Leistungsübertragungsvorrichtung (1) verbunden ist oder diesen bildet;
mit einem zumindest dem hydrodynamischen Drehzahl-/Drehmomentwandler (2, 16, 22) zugeordneten Betriebmittelversorgungs- und/oder Führungssystem (12) und einer Einrichtung (13) zur Beeinflussung des Füllungszustandes des hydrodynamischen Drehzahl-/Drehmomentwandlers (2, 16, 22);
**wobei das Verfahren folgende Schritte umfasst:**
- Hochfahren der elektrischen Antriebsmaschine (9) aus dem Stillstand bei entleertem hydrodynamischen Drehzahl-/Drehmomentwandler (2, 16, 22) bis zum Erreichen einer, die Nenndrehzahl der Antriebsmaschine (9) wenigstens mittelbar charakterisierenden Größe,
- zeitgleich zum Erreichen der die Nenndrehzahl der Antriebsmaschine (9) wenigstens mittelbar charakterisierenden Größe, oder zeitlich versetzt nach Erreichen dieser Befüllung des hydrodynamischen Drehzahl-/Drehmomentwandlers und Antreiben des Turbinenrades
- Antreiben des dritten Elementes des Planetenradgetriebes mit einer Drehzahl, welche aus einer durch das Planetenradgetriebe definierten Überlagerung der Drehzahl des mit der elektrischen Antriebsmaschine verbundenen ersten Elementes des Planetenradgetriebes und der Drehzahl des mit dem Turbinenrad wenigstens mittelbar verbundenen zweiten Elementes des Planetengetriebes resultiert;
wobei
- bei stehender elektrischer Antriebsmaschine (9) und entleertem hydrodynamischen Drehzahl-/Drehmomentwandler (2, 16, 22) das dritte Element des Planetenradgetriebes (4) über eine erste Hilfsantriebseinrichtung (20) wenigstens mittelbar, vorzugsweise direkt angetrieben wird;
- zeitgleich oder mit zeitlichem Versatz zum Antrieb des dritten Elementes des Planetenradgetriebes (4) das erste Element des Planetenradgetriebes (4) oder die Verbindung von erstem Element des Planetenradgetriebes (4) und elektrischer Antriebsmaschine (9) über eine zweite Hilfsantriebseinrichtung (30) wenigstens mittelbar, vorzugsweise direkt angetrieben wird;
- die elektrische Antriebsmaschine über den Antrieb des ersten Elementes des Planetenradgetriebes (4) oder die Verbindung von erstem Element des Planetenradgetriebes (4) und elektrischer Antriebsmaschine (9) solange angetrieben wird bis das Netz und die elektrische Antriebsmaschine synchron sind und im synchronen Zustand die elektrische Antriebsmaschine (9) an ein Netz angeschlossen wird.

3. Verfahren nach Anspruch 1 oder 2,
bei welchem zumindest eines der Schaufelräder (P, T, L) des hydrodynamischen Drehzahl-/Drehmomentwandlers (2, 16, 22) Verstellschaufeln oder Verstellschaufelsegmente aufweist und das Übertragungsverhalten des hydrodynamischen Drehzahl-/Drehmomentwandlers (2, 16, 22), insbesondere die Drehzahl des Turbinenrades (T) durch Verstellung zumindest einzelner Verstellschaufeln oder Verstellschaufelsegmente an zumindest einem der Schaufelräder - Pumpenrad (P), Turbinenrad (T) oder Leitrad (L) - einstellbar ist.

4. Verfahren nach Anspruch 1 bis 3,
bei welchem der hydrodynamische Drehzahl-/Drehmomentwandler (2, 16, 22) bei Vorliegen zumindest eines der nachfolgendend genannten Ereignisse entleert wird:
- beim oder nach Abschluss des Herunterfahren/Außerbetriebnahme des Antriebsstranges (10)
- Detektion eines Füllungszustandes (X2-ist) vor oder bei Inbetriebnahme nach Stillstand des Antriebsstranges (10)
- Detektion eines Füllungszustandes (X2-ist) bei Vorliegen einer Sollwertvorgabe (X11-soll) zur Einstellung einer vordefinierten Betriebsweise der Arbeitsmaschine (11) bei Stillstand der Antriebsmaschine (9) oder des Antriebsstranges (10).

5. Verfahren nach Anspruch 1,
bei welchem, die elektrische Antriebsmaschine (9) mit Hilfe einer Hilfsstarteinrichtung (26) Hochgefahren wird.

6. Verfahren nach einem der Ansprüche 1 bis 5,
bei welchem der Antrieb der ersten Hilfsantriebseinrichtung (20) zum Zeitpunkt des Antriebes des dritten Elementes des Planetenradgetriebes (4) mit der durch das Planetenradgetriebe definierten Überlagerungsdrehzahl aus der Drehzahl des mit der elektrischen Antriebsmaschine (9) verbundenen ersten Elementes des Planetenradgetriebes (4) und der Drehzahl des mit dem Turbinenrad (T) wenigstens mittelbar verbundenen zweiten Elementes des Planetengetriebes (4) deaktiviert oder vom dritten Element entkoppelt wird.

7. Verfahren nach Anspruch 6,
bei welchem die erste Hilfsantriebseinrichtung (20) über eine selbstsynchronisierende Schaltkupplung (24) wenigstens mittelbar mit dem dritten Element des Planetengetriebes (4) gekoppelt ist, wobei die selbstsynchronisierende Schaltkupplung (24) derart ausgelegt und angeordnet ist, automatisch bei Umkehr des Leistungsflusses zum dritten Element des Planetenradgetriebes (4), insbesondere Einleitung eines Antriebsmomentes über das Turbinenrad (T) in das Planetenradgetriebe (4) die erste Hilfseinrichtung (20) vom dritten Element zu entkoppeln.

8. Verfahren nach einem der Ansprüche 2 bis 7,
bei welchem die zweite Hilfsantriebseinrichtung (30) bei Antreiben des ersten Elementes über die Antriebsmaschine (9) deaktiviert oder vom ersten Element des Planetenradgetriebes (4) bzw. der Verbindung zwischen Antriebsmaschine (9) und erstem Element des Planetenradgetriebes (4) entkoppelt wird.

9. Verfahren nach Anspruch 8,
bei welchem die zweite Hilfsantriebseinrichtung (30) über eine selbstsynchronisierende Schaltkupplung (29) wenigstens mittelbar mit dem ersten Element des Planetengetriebes (4) gekoppelt ist, wobei die selbstsynchronisierende Schaltkupplung (29) derart ausgelegt und angeordnet ist, automatisch bei Umkehr des Leistungsflusses zum ersten Element, insbesondere Einleitung eines Antriebsmomentes über die elektrische Antriebsmaschine (9) in das erste Element des Planetenradgetriebes (4) die zweite Hilfseinrichtung (30) von diesem zu entkoppeln.

10. Verfahren nach einem der vorgenannten Ansprüche,
**dadurch gekennzeichnet,**
**dass** die Antriebsmaschine (9) bei Durchführung des Verfahrens gemäß einem der vorgenannten Ansprüche mechanisch mit dem ersten Element des Planetenradgetriebes (4) verbunden ist.

11. Verfahren nach einem der vorgenannten Ansprüche,
**dadurch gekennzeichnet,**
**dass** dieses in einer Ausbildung der Leistungsübertragungsvorrichtung (1) mit den nachfolgenden Merkmalen eingesetzt wird:
der hydrodynamische Wandler (2) ist als Gegenlaufwandler (16) ausgebildet und das erste Element des Planetenradgetriebes (4) wird vom Planetenträger (8), das zweite Element vom Sonnenrad (6) und das dritte Element vom Hohlrad (5) gebildet.

12. Antriebsstrang (10) zum drehzahlvariablen Antreiben einer Arbeitsmaschine (11) mit einer mit konstanter Drehzahl betreibbaren elektrischen Antriebsmaschine (9) und einer Leistungsübertragungsvorrichtung (1), wobei die Leistungsübertragungsvorrichtung (1) zumindest umfasst:
- einen Eingang (E) zum wenigstens mittelbaren Verbinden mit der Antriebsmaschine (9);
- einen Ausgang (A) zum wenigstens mittelbaren Verbinden mit der Arbeitsmaschine (11);
- einen hydrodynamischen Drehzahl-/Drehmomentwandler (2, 16, 22) mit zumindest einem Pumpenschaufelrad (P), einem Turbinenschaufelrad (T) und einem Leitrad (L), welche einen mit Betriebsmittel befüllbaren Arbeitsraum bilden;
- ein Überlagerungsgetriebe (3) mit zumindest einem Planetenradgetriebe (4), umfassend ein Hohlrad (5), ein Sonnenrad (6) sowie einen Planetenträger (8) mit mehreren Planeten (7) als Elemente des Planetenradgetriebes (4), wobei
der Eingang (E) der Leistungsübertragungsvorrichtung (1) mit dem Pumpenrad (P) des hydrodynamischen Drehzahl-/Drehmomentwandlers (2, 16, 22) und einem ersten Element des Planetenradgetriebes (4) wenigstens mittelbar, vorzugsweise direkt verbunden ist, das Turbinenrad (T) des hydrodynamischen Drehzahl-/Drehmomentwandlers (2, 16, 22) mit einem zweiten Element des Planetenradgetriebes (4) wenigstens mittelbar verbunden ist und ein drittes Element des Planetenradgetriebes (4) wenigstens mittelbar mit dem Ausgang (A) der Leistungsübertragungsvorrichtung (1) verbunden ist oder diesen bildet;
- es ist eine Steuervorrichtung (14) vorgesehen, welche mit nachfolgenden Funktionskomponenten kommunizierend gekoppelt ist:
- Erfassungseinrichtungen zur Erfassung zumindest einer der nachfolgenden Größen
- einer einen Istwert (X9-ist) der Betriebsweise der Antriebsmaschine (9) wenigstens mittelbar beschreibenden Größe
- einer einen Istwert (X2-ist) des Füllungszustandes des hydrodynamischen Drehzahl-/Drehmomentwandlers (2, 16, 22) wenigstens mittelbar beschreibenden Größe;
und Stelleinrichtungen zur Ansteuerung der Einrichtungen (13) zur Beeinflussung des Füllungszustandes des hydrodynamischen Drehzahl-/Drehmomentwandlers (2, 16, 22);
**dadurch gekennzeichnet, dass** eine erste Hilfsantriebseinrichtung (20) zum wenigstens mittelbaren Einleiten eines Antriebsmomentes in das dritte Element des Planetenradgetriebes (4) vorgesehen ist.

13. Antriebsstrang (10) nach Anspruch 12,
**dadurch gekennzeichnet,**
**dass** zumindest die Beschaufelung eines der Schaufelräder (P, T, L) des hydrodynamischen Drehzahl-/Drehmomentwandlers (2, 16, 22) wenigstens eine, über eine Stellvorrichtung betätigbare Stellschaufel und/oder wenigstens eine mehrgliedrige Schaufel mit zumindest einem verstellbaren Schaufelsegment umfasst.

14. Antriebsstrang (10) nach Anspruch 12 oder 13,
**dadurch gekennzeichnet,**
**dass** der hydrodynamische Drehzahl-/Drehmomentwandler (2) als Gegenlaufwandler (16) ausgebildet ist und ein erstes Element des Planetenradgetriebes (4) vom Planetenträger (8) des Planetenradgetriebes (4), das zweite Element vom Sonnenrad (6) des Planetenradgetriebes (4) und das dritte Element vom Hohlrad (5) des Planetenradgetriebes (4) gebildet sind.

15. Antriebsstrang (10) nach Anspruch 14,
**dadurch gekennzeichnet,**
**dass** das Turbinenrad (T) über eine Hohlwelle mit dem Sonnenrad (6) verbunden ist und die durch die Hohlwelle verlaufende Eingangswelle (E) auf der dem hydrodynamischen Drehzahl-/Drehmomentwandler (2, 16) abgewandten Seite des Planetengetriebes (4) mit dem Planetenträger (8) verbunden ist.

16. Antriebsstrang (10) nach Anspruch 12 oder 13,
**dadurch gekennzeichnet,**
**dass** der hydrodynamische Drehzahl-/Drehmomentwandler (2) als Gleichlaufwandler (22) ausgebildet ist wobei alternativ eine der nachfolgenden Kopplungsmöglichkeiten mit dem Überlagerungsgetriebe (3), insbesondere Planetenradgetriebe (4) gegeben sind:
a) das erste Element des Planetengetriebes (4) vom Hohlrad (5), das zweite Element des Planetengetriebes vom Planetenträger (8) und das dritte Element des Planetengetriebes vom Sonnenrad (6) gebildet werden und das Turbinenrad (T) entweder direkt oder über ein Umkehrgetriebe mit dem Planetenträger (8) verbunden ist;
b) das erste Element des Planetengetriebes (4) vom Hohlrad (5), das zweite Element des Planetengetriebes vom Sonnenrad (6) und das dritte Element des Planetengetriebes vom Planetenträger (8) gebildet werden;
c) das erste Element des Planetengetriebes (4) vom Sonnenrad (6), das zweite Element des Planetengetriebes (4) vom Hohlrad (5) und das dritte Element des Planetengetriebes vom Planetenträger (8) gebildet werden;
d) das erste Element des Planetengetriebes (4) vom Sonnenrad (6), das zweite Element des Planetengetriebes vom Planetenträger (8) und das dritte Element des Planetengetriebes vom Hohlrad (5) gebildet werden;
e) das erste Element des Planetengetriebes vom Planetenträger (8), das zweite Element des Planetengetriebes vom Hohlrad (5) und das dritte Element des Planetengetriebes vom Sonnenrad (6) gebildet werden.

17. Antriebsstrang nach einem der Ansprüche 12 bis 16,
**dadurch gekennzeichnet,**
**dass** die erste Hilfsantriebseinrichtung (20) derart angeordnet und ausgebildet ist, dass das Antriebsmoment entsprechend zumindest einer der nachfolgenden Möglichkeiten dem dritten Element des Planetengetriebes (4) zugeführt wird:
- Einleitung des Antriebsmomentes direkt in das dritte Element des Planetenradgetriebes (4)
- Einleitung des Antriebsmomentes in die Verbindung zwischen drittem Element des Planetenradgetriebes (4) und Ausgang (A) der Leistungsübertragungsvorrichtung (1)
- Einleitung des Antriebsmomentes am Ausgang (A) der Leistungsübertragungsvorrichtung (1)
- Einleitung des Antriebsmomentes in die Verbindung zwischen Ausgang (A) der Leistungsübertragungsvorrichtung (1) und der Arbeitsmaschine (11)
- Einleitung des Antriebsmomentes in eine mit dem dritten Element oder der Verbindung zwischen drittem Element des Planetenradgetriebes (4) und Ausgang (A) oder der Verbindung zwischen Ausgang (A) und Arbeitsmaschine (11) verbundene Drehzahl-/Drehmomentwandlungseinrichtung (23).

18. Antriebsstrang (10) nach einem der Ansprüche 16 bis 17,
**dadurch gekennzeichnet,**
**dass** dem Planetengetriebe (4) eine Drehzahl-/Drehmomentwandlungseinrichtung (23), insbesondere ein als Über- oder Untersetzungsgetriebe ausgebildetes Stirnradgetriebe im Kraftfluss zwischen diesem und der Arbeitsmaschine (11) nachgeordnet ist, wobei der Ausgang der Drehzahl-/Drehmomentwandlungseinrichtung (23) exzentrisch zum Planetengetriebe (4) angeordnet ist und die erste Hilfsantriebseinrichtung (20) am freien vom Planetengetriebe (4) abgewandten Wellenende (25) der Drehzahl-/Drehmomentwandlungseinrichtung (23)angeordnet ist.

19. Antriebsstrang (10) nach einem der Ansprüche 12 bis 18,
**dadurch gekennzeichnet,**
**dass** eine zweite Hilfsantriebseinrichtung (30) zum wenigstens mittelbaren Einleiten eines Antriebsmomentes in das erste Element des Planetenradgetriebes (4) vorgesehen ist.

20. Antriebsstrang (10) nach Anspruch 19,
**dadurch gekennzeichnet,**
**dass** die zweite Hilfsantriebseinrichtung derart angeordnet und ausgebildet ist, dass das Antriebsmoment entsprechend zumindest einer der nachfolgenden Möglichkeiten dem ersten Element des Planetengetriebes (4) zugeführt wird:
- Einleitung des Antriebsmomentes direkt in das erste Element des Planetenradgetriebes (4)
- Einleitung des Antriebsmomentes in die Verbindung zwischen erstem Element des Planetenradgetriebes (4) und Eingang (E) der Leistungsübertragungsvorrichtung (1).

21. Antriebsstrang (10) nach einem der Ansprüche 12 bis 20,
**dadurch gekennzeichnet,**
**dass** die erste und/oder zweite Hilfsantriebseinrichtung (20, 30) vom Antriebsstrang (10) entkoppelbar ist.

22. Antriebsstrang nach Anspruch 21,
**dadurch gekennzeichnet,**
**dass** die erste und/oder zweite Hilfsantriebseinrichtung (20, 30) über eine selbstsynchronisierende Schaltkupplung (24, 29) mit dem Antriebsstrang (10), insbesondere einer Funktionskomponente des Antriebsstranges (10) verbunden ist.

23. Antriebsstrang nach einem der Ansprüche 12 bis 22,
**dadurch gekennzeichnet,**
**dass** die erste und/oder zweite Hilfsantriebseinrichtung (20, 30) als eine Einrichtung ausgewählt aus nachfolgenden Einrichtungen ausgebildet ist:
- eine Wellendrehvorrichtung, insbesondere Rotordrehvorrichtung
- eine Antriebsmaschine, insbesondere Elektromotor

24. Antriebsstrang nach einem der Ansprüche 12 bis 23
**dadurch gekennzeichnet,**
**dass** der elektrischen Antriebsmaschine (9) die Hilfsstarteinrichtung (26) zum Hochfahren zugeordnet ist, wobei diese insbesondere umfasst:
- elektrischen Hilfsmotor und einen Wandler
- elektrischen Hilfsmotor und Frequenzumrichter

25. Antriebsstrang nach einem der Ansprüche 12 bis 23,
**dadurch gekennzeichnet,**
**dass** die Steuervorrichtung (14) kommunizierend mit weiteren Erfassungseinrichtungen zum Erfassen des Istzustandes einer die Betriebsweise der Arbeitsmaschine wenigstens mittelbar charakterisierenden Größe und Stelleinrichtungen der Hilfsantriebsmaschinen gekoppelt ist.

## Claims

1. Method for operating a drive train for driving a working machine (11) with variable rotation speed, with an electric drive machine which can be operated at constant rotation speed and a power transmission device (1), wherein the power transmission device (1) comprises at least:
- an input (E) for at least indirect connection to the drive machine (9);
- an output (A) for at least indirect connection to the working machine (11);
- a hydrodynamic rotation speed/torque converter (2, 16, 22) with at least a pump vane wheel (P), a turbine vane wheel (T) and a guide wheel (L), which form a working chamber that can be filled with operating medium,
- a superposition gear mechanism (3) with at least one planetary gear mechanism (4) comprising a ring gear (5), a sun gear (6) and a planet carrier (8) with several planets (7) as elements of the planetary gear mechanism (4), wherein
the input (E) of the power transmission device (1) is connected at least indirectly, preferably directly, to the pump wheel (P) of the hydrodynamic rotation speed/torque converter (2, 16, 22) and to a first element of the planetary gear mechanism (4), the turbine wheel (T) of the hydrodynamic rotation speed/torque converter (2, 16, 22) is connected at least indirectly to a second element of the planetary gear mechanism, and a third element of the planetary gear mechanism (4) is connected at least indirectly to or forms the output (A) of the power transmission device (1);
with an operating medium supply and/or guidance system (12) assigned at least to the hydrodynamic rotation speed/torque converter (2, 16, 22), and a device (13) for influencing the filling state of the hydrodynamic rotation speed/torque converter (2, 16, 22);
wherein the method comprises the following steps:
- running up the electric drive machine (9) from a standstill with evacuated hydrodynamic rotation speed/torque converter (2, 16, 22) until a variable which at least indirectly characterizes the nominal rotation speed of the drive machine (9) is attained,
- simultaneously with the attainment of the variable which at least indirectly characterizes the nominal rotation speed of the drive machine (9), or with a temporal offset after attaining this, filling the hydrodynamic rotation speed/torque converter and driving the turbine wheel,
- driving the third element of the planetary gear mechanism with a rotation speed which results from a superposition, defined by the planetary gear mechanism, of the rotation speed of the first element of the planetary gear mechanism, said first element being connected to the electric drive machine, and of the rotation speed of the second element of the planetary gear mechanism, said second element being at least indirectly connected to the turbine wheel;
wherein
- with the electric drive machine (9) stopped and the hydrodynamic rotation speed/torque converter (2, 16, 22) evacuated, the third element of the planetary gear mechanism (4) is driven at least indirectly, preferably directly, via a first auxiliary drive device (20);
- simultaneously with this or with a temporal offset from the setting of a predefined rotation speed of the third element of the planetary gear mechanism (4), the electric drive machine (9) is run up, and, on reversal of the force flow to the third element of the planetary gear mechanism by driving of the second element of the planetary gear mechanism (4) by the turbine wheel (T) when the hydrodynamic rotation speed/torque converter (2, 16, 22) is in a filled state, the first auxiliary drive device (20) is decoupled from the third element of the planetary gear mechanism.

2. Method for operating a drive train for driving a working machine (11) with variable rotation speed, with an electric drive machine which can be operated at constant rotation speed and a power transmission device (1), wherein the power transmission device (1) comprises at least:
- an input (E) for at least indirect connection to the drive machine (9);
- an output (A) for at least indirect connection to the working machine (11);
- a hydrodynamic rotation speed/torque converter (2, 16, 22) with at least a pump vane wheel (P), a turbine vane wheel (T) and a guide wheel (L), which form a working chamber that can be filled with operating medium,
- a superposition gear mechanism (3) with at least one planetary gear mechanism (4) comprising a ring gear (5), a sun gear (6) and a planet carrier (8) with several planets (7) as elements of the planetary gear mechanism (4), wherein
the input (E) of the power transmission device (1) is connected at least indirectly, preferably directly, to the pump wheel (P) of the hydrodynamic rotation speed/torque converter (2, 16, 22) and to a first element of the planetary gear mechanism (4), the turbine wheel (T) of the hydrodynamic rotation speed/torque converter (2, 16, 22) is connected at least indirectly to a second element of the planetary gear mechanism, and a third element of the planetary gear mechanism (4) is connected at least indirectly to or forms the output (A) of the power transmission device (1);
with an operating medium supply and/or guidance system (12) assigned at least to the hydrodynamic rotation speed/torque converter (2, 16, 22), and a device (13) for influencing the filling state of the hydrodynamic rotation speed/torque converter (2, 16, 22);
wherein the method comprises the following steps:
- running up the electric drive machine (9) from a standstill with evacuated hydrodynamic rotation speed/torque converter (2, 16, 22) until a variable which at least indirectly characterizes the nominal rotation speed of the drive machine (9) is attained,
- simultaneously with the attainment of the variable which at least indirectly characterizes the nominal rotation speed of the drive machine (9), or with a temporal offset after attaining this, filling the hydrodynamic rotation speed/torque converter and driving the turbine wheel,
- driving the third element of the planetary gear mechanism with a rotation speed which results from a superposition, defined by the planetary gear mechanism, of the rotation speed of the first element of the planetary gear mechanism, said first element being connected to the electric drive machine, and of the rotation speed of the second element of the planetary gear mechanism, said second element being at least indirectly connected to the turbine wheel;
wherein
- with the electric drive machine (9) stopped and the hydrodynamic rotation speed/torque converter (2, 16, 22) evacuated, the third element of the planetary gear mechanism (4) is driven at least indirectly, preferably directly, via a first auxiliary drive device (20);
- simultaneously or with a temporal offset from the driving of the third element of the planetary gear mechanism (4), the first element of the planetary gear mechanism (4) or the connection of the first element of the planetary gear mechanism (4) to the electric drive machine (9) is driven at least indirectly, preferably directly, via a second auxiliary drive device (30);
- the electric drive machine is driven via the drive of the first element of the planetary gear mechanism (4) or the connection of the first element of the planetary gear mechanism (4) to the electric drive machine (9) until the network and the electric drive machine are in synchrony, and in the synchronous state the electric drive machine (9) is connected to a network.

3. Method according to Claim 1 or 2,
wherein at least one of the vane wheels (P, T, L) of the hydrodynamic rotation speed/torque converter (2, 16, 22) comprises adjustable vanes or adjustable vane segments, and the transmission behaviour of the hydrodynamic rotation speed/torque converter (2, 16, 22), in particular the rotation speed of the turbine wheel (T), can be set by adjusting at least individual adjustable vanes or adjustable vane segments on at least one of the vane wheels - pump wheel (P), turbine wheel (T) or guide wheel (L).

4. Method according to Claims 1 to 3,
wherein the hydrodynamic rotation speed/torque converter (2, 16, 22) is evacuated in the presence of at least one of the events listed below:
- on or after termination of the run-down/shut-down of the drive train (10),
- detection of a filling state (X2-act) before or on start-up after shut-down of the drive train (10),
- detection of a filling state (X2-act) in the presence of a predefined nominal value (X11-nom) in order to set a predefined operating mode of the working machine (11) when the drive machine (9) or drive train (10) is in a stopped state.

5. Method according to Claim 1,
wherein the electric drive machine (9) is run up by means of an auxiliary start device (26).

6. Method according to any of Claims 1 to 5,
wherein at the time of the driving of the third element of the planetary gear mechanism (4) with the superposition rotation speed, which is defined by the planetary gear mechanism from the rotation speed of the first element of the planetary gear mechanism (4), said first element being connected to the electric drive machine (9), and the rotation speed of the second element of the planetary gear mechanism (4), said second element being connected at least indirectly to the turbine wheel (T), the drive of the first auxiliary drive device (20) is deactivated or decoupled from the third element.

7. Method according to Claim 6,
wherein the first auxiliary drive device (20) is coupled at least indirectly to the third element of the planetary gear mechanism (4) via a self-synchronizing shifting clutch (24), wherein the self-synchronizing shifting clutch (24) is designed and arranged so as to decouple the first auxiliary device (20) from the third element automatically on reversal of the power flow to the third element of the planetary gear mechanism (4), in particular introduction of a drive moment into the planetary gear mechanism (4) via the turbine wheel (T).

8. Method according to any of Claims 2 to 7, wherein on driving of the first element via the drive machine (9), the second auxiliary drive device (30) is deactivated or decoupled from the first element of the planetary gear mechanism (4) or from the connection between the drive machine (9) and the first element of the planetary gear mechanism (4).

9. Method according to Claim 8,
wherein the second auxiliary drive device (30) is coupled at least indirectly to the first element of the planetary gear mechanism (4) via a self-synchronizing shifting clutch (29), wherein the self-synchronizing shifting clutch (29) is designed and arranged so as to decouple the second auxiliary device (30) from the first element automatically on reversal of the power flow to the first element, in particular introduction of a drive moment into the first element of the planetary gear mechanism (4) via the electric drive machine (9).

10. Method according to any of the preceding claims, **characterized in that**
on performance of the method according to any of the preceding claims, the drive machine (9) is mechanically connected to the first element of the planetary gear mechanism (4).

11. Method according to any of the preceding claims, **characterized in that** it is used in a configuration of the power transmission device (1) with the following features:
the hydrodynamic converter (2) is configured as a reverse rotation converter (16), and the first element of the planetary gear mechanism (4) is formed by the planet carrier (8), the second element by the sun gear (6), and the third element by the ring gear (5).

12. Drive train (10) for driving a working machine (11) with variable rotation speed, with an electric drive machine (9) which can be operated at constant rotation speed and a power transmission device (1), wherein the power transmission device (1) comprises at least:
- an input (E) for at least indirect connection to the drive machine (9);
- an output (A) for at least indirect connection to the working machine (11);
- a hydrodynamic rotation speed/torque converter (2, 16, 22) with at least a pump vane wheel (P), a turbine vane wheel (T) and a guide wheel (L), which form a working chamber that can be filled with operating medium;
- a superposition gear mechanism (3) with at least one planetary gear mechanism (4) comprising a ring gear (5), a sun gear (6) and a planet carrier (8) with several planets (7) as elements of the planetary gear mechanism (4), wherein
the input (E) of the power transmission device (1) is connected at least indirectly, preferably directly, to the pump wheel (P) of the hydrodynamic rotation speed/torque converter (2, 16, 22) and to a first element of the planetary gear mechanism (4), the turbine wheel (T) of the hydrodynamic rotation speed/torque converter (2, 16, 22) is connected at least indirectly to a second element of the planetary gear mechanism (4), and a third element of the planetary gear mechanism (4) is connected at least indirectly to or forms the output (A) of the power transmission device (1);
- a control device (14) is provided which is coupled communicatively to the following functional components:
- detection devices for detecting at least one of the following variables:
- a variable at least indirectly describing an actual value (X9-act) of the operating mode of the drive machine (9),
- a variable at least indirectly describing an actual value (X2-act) of the filling state of the hydrodynamic rotation speed/torque converter (2, 16, 22);
and actuation devices for operating the devices (13) for influencing the filling state of the hydrodynamic rotation speed/torque converter (2, 16, 22);
**characterized in that** a first auxiliary drive device (20) is provided for at least indirectly introducing a drive moment into the third element of the planetary gear mechanism (4).

13. Drive train (10) according to Claim 12, **characterized in that**
at least the vanes of one of the vane wheels (P, T, L) of the hydrodynamic rotation speed/torque converter (2, 16, 22) comprises at least one adjustable vane which can be actuated via an adjustment device, and/or at least one multi-member vane with at least one adjustable vane segment.

14. Drive train (10) according to Claim 12 or 13, **characterized in that**
the hydrodynamic rotation speed/torque converter (2) is configured as a reverse rotation converter (16), and a first element of the planetary gear mechanism (4) is formed by the planet carrier (8) of the planetary gear mechanism (4), the second element by the sun gear (6) of the planetary gear mechanism (4), and the third element by the ring gear (5) of the planetary gear mechanism (4).

15. Drive train (10) according to Claim 14, **characterized in that**
the turbine wheel (T) is connected to the sun gear (6) via a hollow shaft, and the input shaft (E) running through the hollow shaft is connected to the planet carrier (8) on that side of the planetary gear mechanism (4) which faces away from the hydrodynamic rotation speed/torque converter (2, 16).

16. Drive train (10) according to Claim 12 or 13, **characterized in that**
the hydrodynamic rotation speed/torque converter (2) is configured as a synchronous rotation converter (22), wherein alternatively one of the following coupling possibilities is provided with the superposition gear mechanism (3), in particular planetary gear mechanism (4) :
a) the first element of the planetary gear mechanism (4) is formed by the ring gear (5), the second element of the planetary gear mechanism by the planet carrier (8), and the third element of the planetary gear mechanism by the sun gear (6), and the turbine wheel (T) is connected to the planet carrier (8) either directly or via a reversing gear mechanism;
b) the first element of the planetary gear mechanism (4) is formed by the ring gear (5), the second element of the planetary gear mechanism by the sun gear (6), and the third element of the planetary gear mechanism by the planet carrier (8);
c) the first element of the planetary gear mechanism (4) is formed by the sun gear (6), the second element of the planetary gear mechanism (4) by the ring gear (5), and the third element of the planetary gear mechanism by the planet carrier (8);
d) the first element of the planetary gear mechanism (4) is formed by the sun gear (6), the second element of the planetary gear mechanism by the planet carrier (8), and the third element of the planetary gear mechanism by the ring gear (5);
e) the first element of the planetary gear mechanism is formed by the planet carrier (8), the second element of the planetary gear mechanism by the ring gear (5), and the third element of the planetary gear mechanism by the sun gear (6).

17. Drive train according to any of Claims 12 to 16, **characterized in that**
the first auxiliary drive device (20) is arranged and configured such that the drive moment is supplied to the third element of the planetary gear mechanism (4) according to at least one of the following possibilities:
- introduction of the drive moment directly into the third element of the planetary gear mechanism (4),
- introduction of the drive moment into the connection between the third element of the planetary gear mechanism (4) and the output (A) of the power transmission device (1),
- introduction of the drive moment at the output (A) of the power transmission device (1),
- introduction of the drive moment into the connection between the output (A) of the power transmission device (1) and the working machine (11),
- introduction of the drive moment into a rotation speed/torque conversion device (23) connected to the third element or to the connection between the third element of the planetary gear mechanism (4) and the output (A) or to the connection between the output (A) and the working machine (11).

18. Drive train (10) according to one of Claims 16 to 17, **characterized in that**
a rotation speed/torque conversion device (23), in particular a spur gear mechanism formed as a step-up or step-down gear mechanism, is situated downstream of the planetary gear mechanism (4) in the force flow between this and the working machine (11), wherein the output of the rotation speed/torque conversion device (23) is arranged eccentrically relative to the planetary gear mechanism (4), and the first auxiliary drive device (20) is arranged at the free shaft end (25) of the rotation speed/torque conversion device (23), said end facing away from the planetary gear mechanism (4).

19. Drive train (10) according to any of Claims 12 to 18, **characterized in that**
a second auxiliary drive device (30) is provided for at least indirectly introducing a drive moment into the first element of the planetary gear mechanism (4).

20. Drive train (10) according to Claim 19, **characterized in that**
the second auxiliary drive device is arranged and configured such that the drive moment is supplied to the first element of the planetary gear mechanism (4) according to at least one of the following possibilities:
- introduction of the drive moment directly into the first element of the planetary gear mechanism (4),
- introduction of the drive moment into the connection between the first element of the planetary gear mechanism (4) and the input (E) of the power transmission device (1).

21. Drive train (10) according to any of Claims 12 to 20, **characterized in that**
the first and/or second auxiliary drive device (20, 30) can be decoupled from the drive train (10).

22. Drive train according to Claim 21,
**characterized in that** the first and/or second auxiliary drive device (20, 30) is connected to the drive train (10), in particular to a functional component of the drive train (10), via a self-synchronizing shifting clutch (24, 29).

23. Drive train according to any of Claims 12 to 22, **characterized in that**
the first and/or second auxiliary drive device (20, 30) is configured as a device selected from the following devices:
- a shaft rotation device, in particular a rotor rotation device,
- a drive machine, in particular an electric motor.

24. Drive train according to any of Claims 12 to 23, **characterized in that**
the auxiliary start device (26) is assigned to the electric drive machine (9) for the run-up, wherein said device comprises in particular:
- an electric auxiliary motor and a converter,
- an electric auxiliary motor and a frequency converter.

25. Drive train according to any of Claims 12 to 23, **characterized in that**
the control device (14) is coupled communicatively to further detection devices for detecting the actual state of a variable at least indirectly characterizing the operating mode of the working machine, and to adjustment devices of the auxiliary drive machines.

## Revendications

1. Procédé pour faire fonctionner une chaîne cinématique servant à l'entraînement avec vitesse de rotation variable d'une machine de travail (11) comprenant une machine d'entraînement électrique pouvant fonctionner avec une vitesse de rotation constante et un arrangement de transmission de puissance (1), l'arrangement de transmission de puissance (1) comprenant au moins :
- une entrée (E) destinée à la liaison au moins indirecte avec la machine d'entraînement (9) ;
- une sortie (A) destinée à la liaison au moins indirecte avec la machine de travail (11) ;
- un convertisseur de vitesse de rotation/couple (2, 16, 22) hydrodynamique comprenant au moins une roue à aubes de pompe (P), une roue à aubes de turbine (T) et une roue à aubes directrice (L), lesquelles forment un espace de travail pouvant être rempli avec une ressource opérationnelle,
- un engrenage à superposition (3) comprenant au moins un train planétaire (4), comportant une couronne de train planétaire (5), une roue solaire (6) ainsi qu'une cage de transmission planétaire (8) comprenant plusieurs satellites (7) en tant qu'éléments du train planétaire (4),
l'entrée (E) de l'arrangement de transmission de puissance (1) étant reliée au moins indirectement, de préférence directement, à la roue de pompe (P) du convertisseur de vitesse de rotation/couple (2, 16, 22) hydrodynamique et un premier élément du train planétaire (4), la roue de turbine (T) du convertisseur de vitesse de rotation/couple (2, 16, 22) hydrodynamique étant reliée au moins indirectement à un deuxième élément du train planétaire et un troisième élément du train planétaire (4) étant relié au moins indirectement à la sortie (A) de l'arrangement de transmission de puissance (1) ou formant celle-ci ;
comprenant un système d'alimentation en ressource opérationnelle et/ou de guidage (12) au moins associé au convertisseur de vitesse de rotation/couple (2, 16, 22) hydrodynamique et un dispositif (13) destiné à influencer le niveau de remplissage du convertisseur de vitesse de rotation/couple (2, 16, 22) hydrodynamique ;
le procédé comprenant les étapes suivantes :
- montée en régime de la machine d'entraînement (9) électrique à partir de l'immobilité avec le convertisseur de vitesse de rotation/couple (2, 16, 22) hydrodynamique vidé jusqu'à atteindre une grandeur qui caractérise au moins indirectement la vitesse de rotation nominale de la machine d'entraînement (9),
- simultanément avec l'atteinte de la grandeur qui caractérise au moins indirectement la vitesse de rotation nominale de la machine d'entraînement (9) ou avec un décalage dans le temps après avoir atteint celle-ci, remplissage du convertisseur de vitesse de rotation/couple hydrodynamique et entraînement de la roue de turbine,
- entraînement du troisième élément du train planétaire avec une vitesse de rotation qui résulte d'une superposition, définie par le train planétaire, de la vitesse de rotation du premier élément du train planétaire, relié à la machine d'entraînement électrique, et de la vitesse de rotation du deuxième élément du train planétaire, relié au moins indirectement à la roue de turbine ;
- lorsque la machine d'entraînement (9) est à l'arrêt et le convertisseur de vitesse de rotation/couple (2, 16, 22) hydrodynamique vidé, le troisième élément du train planétaire (4) étant entraîné au moins indirectement, de préférence directement par le biais d'un premier dispositif d'entraînement auxiliaire (20) ;
- simultanément avec cela ou avec un décalage dans le temps pour le réglage d'une vitesse de rotation prédéfinie du troisième élément du train planétaire (4), la machine d'entraînement (9) électrique étant montée en régime et le premier dispositif d'entraînement auxiliaire (20) étant désaccouplé du troisième élément du train planétaire lors de l'inversion du flux de force vers le troisième élément du train planétaire par l'entraînement du deuxième élément du train planétaire (4) par la roue de turbine (T) lorsque le convertisseur de vitesse de rotation/couple (2, 16, 22) hydrodynamique vidé est rempli.

2. Procédé pour faire fonctionner une chaîne cinématique servant à l'entraînement avec vitesse de rotation variable d'une machine de travail (11) comprenant une machine d'entraînement électrique pouvant fonctionner avec une vitesse de rotation constante et un arrangement de transmission de puissance (1), l'arrangement de transmission de puissance (1) comprenant au moins :
- une entrée (E) destinée à la liaison au moins indirecte avec la machine d'entraînement (9) ;
- une sortie (A) destinée à la liaison au moins indirecte avec la machine de travail (11) ;
- un convertisseur de vitesse de rotation/couple (2, 16, 22) hydrodynamique comprenant au moins une roue à aubes de pompe (P), une roue à aubes de turbine (T) et une roue à aubes directrice (L), lesquelles forment un espace de travail pouvant être rempli avec une ressource opérationnelle,
- un engrenage à superposition (3) comprenant au moins un train planétaire (4), comportant une couronne de train planétaire (5), une roue solaire (6) ainsi qu'une cage de transmission planétaire (8) comprenant plusieurs satellites (7) en tant qu'éléments du train planétaire (4),
l'entrée (E) de l'arrangement de transmission de puissance (1) étant reliée au moins indirectement, de préférence directement, à la roue de pompe (P) du convertisseur de vitesse de rotation/couple (2, 16, 22) hydrodynamique et un premier élément du train planétaire (4), la roue de turbine (T) du convertisseur de vitesse de rotation/couple (2, 16, 22) hydrodynamique étant reliée au moins indirectement à un deuxième élément du train planétaire et un troisième élément du train planétaire (4) étant relié au moins indirectement à la sortie (A) de l'arrangement de transmission de puissance (1) ou formant celle-ci ;
comprenant un système d'alimentation en ressource opérationnelle et/ou de guidage (12) au moins associé au convertisseur de vitesse de rotation/couple (2, 16, 22) hydrodynamique et un dispositif (13) destiné à influencer le niveau de remplissage du convertisseur de vitesse de rotation/couple (2, 16, 22) hydrodynamique ;
le procédé comprenant les étapes suivantes :
- montée en régime de la machine d'entraînement (9) électrique à partir de l'immobilité avec le convertisseur de vitesse de rotation/couple (2, 16, 22) hydrodynamique vidé jusqu'à atteindre une grandeur qui caractérise au moins indirectement la vitesse de rotation nominale de la machine d'entraînement (9),
- simultanément avec l'atteinte de la grandeur qui caractérise au moins indirectement la vitesse de rotation nominale de la machine d'entraînement (9) ou avec un décalage dans le temps après avoir atteint celle-ci, remplissage du convertisseur de vitesse de rotation/couple hydrodynamique et entraînement de la roue de turbine,
- entraînement du troisième élément du train planétaire avec une vitesse de rotation qui résulte d'une superposition, définie par le train planétaire, de la vitesse de rotation du premier élément du train planétaire, relié à la machine d'entraînement électrique, et de la vitesse de rotation du deuxième élément du train planétaire, relié au moins indirectement à la roue de turbine ;
- lorsque la machine d'entraînement (9) électrique est à l'arrêt et le convertisseur de vitesse de rotation/couple (2, 16, 22) hydrodynamique vidé, le troisième élément du train planétaire (4) étant entraîné au moins indirectement, de préférence directement par le biais d'un premier dispositif d'entraînement auxiliaire (20) ;
- simultanément avec cela ou avec un décalage dans le temps pour l'entraînement du troisième élément du train planétaire (4), le premier élément du train planétaire (4) ou la liaison du premier élément du train planétaire (4) et de la machine d'entraînement (9) électrique étant entraîné au moins indirectement, de préférence directement par le biais d'un deuxième dispositif d'entraînement auxiliaire (30) ;
- la machine d'entraînement (9) électrique étant entraînée par le biais de l'entraînement du premier élément du train planétaire (4) ou de la liaison du premier élément du train planétaire (4) et de la machine d'entraînement (9) électrique jusqu'à ce que le réseau et la machine d'entraînement électrique soient synchrones et, à l'état synchrone, la machine d'entraînement (9) électrique étant raccordée à un réseau.

3. Procédé selon la revendication 1 ou 2, avec lequel au moins l'une parmi les roues à aubes (P, T, L) du convertisseur de vitesse de rotation/couple (2, 16, 22) hydrodynamique possède des aubes réglables ou des segments d'aube réglables et le comportement de transmission du convertisseur de vitesse de rotation/couple (2, 16, 22) hydrodynamique, notamment la vitesse de rotation de la roue de turbine (T), est réglable par positionnement d'au moins certaines aubes réglables ou certains segments d'aube réglables sur au moins l'une des roues à aubes - roue de pompe (P), roue de turbine (T) ou roue à aubes directrice (L).

4. Procédé selon l'une des revendications 1 à 3,
avec lequel le convertisseur de vitesse de rotation/couple (2, 16, 22) hydrodynamique est vidé en présence d'au moins l'un des événements mentionnés ci-après :
- lors de ou après l'achèvement de la réduction en régime/mise hors service de la chaîne cinématique (10)
- détection d'un niveau de remplissage (X2-ist) avant ou lors de la mise en service après l'immobilité de la chaîne cinématique (10)
- détection d'un niveau de remplissage (X2-ist) en présence d'une prescription de valeur de consigne (X11-soll) servant au réglage d'un mode de fonctionnement prédéfini de la machine de travail (11) lors de l'immobilité de la machine d'entraînement (9) ou de la chaîne cinématique (10).

5. Procédé selon la revendication 1, avec lequel la machine d'entraînement (9) électrique est montée en régime à l'aide d'un dispositif de démarrage auxiliaire (26) .

6. Procédé selon l'une des revendications 1 à 5, avec lequel l'entraînement du premier dispositif d'entraînement auxiliaire (20), au moment de l'entraînement du troisième élément du train planétaire (4) à la vitesse de rotation de superposition définie par le train planétaire, constituée de la vitesse de rotation du premier élément du train planétaire (4) relié à la machine d'entraînement (9) électrique et de la vitesse de rotation du deuxième élément du train planétaire (4) relié au moins indirectement à la roue de turbine (T), est désactivé ou désaccouplé du troisième élément.

7. Procédé selon la revendication 6, avec lequel le premier dispositif d'entraînement auxiliaire (20) est couplé au moins indirectement au troisième élément du train planétaire (4) par le biais d'un embrayage autosynchronisé (24), l'embrayage autosynchronisé (24) étant conçu et disposé de manière à désaccoupler le premier dispositif d'entraînement auxiliaire (20) du troisième élément automatiquement lors de l'inversion du flux de force vers le troisième élément du train planétaire (4), notamment l'introduction d'un couple d'entraînement dans le train planétaire (4) par le biais de la roue de turbine (T).

8. Procédé selon l'une des revendications 2 à 7, avec lequel le deuxième dispositif d'entraînement auxiliaire (30), lors de l'entraînement du premier élément par le biais de la machine d'entraînement (9), est désactivé ou désaccouplé du premier élément du train planétaire (4) ou de la liaison entre la machine d'entraînement (9) et le premier élément du train planétaire (4).

9. Procédé selon la revendication 8, avec lequel le deuxième dispositif d'entraînement auxiliaire (30) est couplé au moins indirectement au premier élément du train planétaire (4) par le biais d'un embrayage autosynchronisé (29), l'embrayage autosynchronisé (29) étant conçu et disposé de manière à désaccoupler le deuxième dispositif d'entraînement auxiliaire (30) du premier élément du train planétaire (4) automatiquement lors de l'inversion du flux de force vers le premier élément, notamment l'introduction d'un couple d'entraînement dans celui-ci par le biais de la machine électrique (9).

10. Procédé selon l'une des revendications précédentes, **caractérisé en ce que** la machine d'entraînement (9), lors de la mise en œuvre du procédé selon l'une des revendications précédentes, est reliée mécaniquement au premier élément du train planétaire (4).

11. Procédé selon l'une des revendications précédentes, **caractérisé en ce que** celui-ci est utilisé dans une configuration de l'arrangement de transmission de puissance (1) ayant les caractéristiques suivantes :
le convertisseur hydrodynamique (2) est réalisé sous la forme d'un convertisseur à rotation antagoniste (16) et le premier élément du train planétaire (4) est formé par la cage de transmission planétaire (8), le deuxième élément par la roue solaire (6) et le troisième élément par la couronne de train planétaire (5).

12. Chaîne cinématique (10) servant à l'entraînement avec vitesse de rotation variable d'une machine de travail (11) comprenant une machine d'entraînement (9) électrique pouvant fonctionner avec une vitesse de rotation constante et un arrangement de transmission de puissance (1), l'arrangement de transmission de puissance (1) comprenant au moins :
- une entrée (E) destinée à la liaison au moins indirecte avec la machine d'entraînement (9) ;
- une sortie (A) destinée à la liaison au moins indirecte avec la machine de travail (11) ;
- un convertisseur de vitesse de rotation/couple (2, 16, 22) hydrodynamique comprenant au moins une roue à aubes de pompe (P), une roue à aubes de turbine (T) et une roue à aubes directrice (L), lesquelles forment un espace de travail pouvant être rempli avec une ressource opérationnelle,
- un engrenage à superposition (3) comprenant au moins un train planétaire (4), comportant une couronne de train planétaire (5), une roue solaire (6) ainsi qu'une cage de transmission planétaire (8) comprenant plusieurs satellites (7) en tant qu'éléments du train planétaire (4),
l'entrée (E) de l'arrangement de transmission de puissance (1) étant reliée au moins indirectement, de préférence directement, à la roue de pompe (P) du convertisseur de vitesse de rotation/couple (2, 16, 22) hydrodynamique et un premier élément du train planétaire (4), la roue de turbine (T) du convertisseur de vitesse de rotation/couple (2, 16, 22) hydrodynamique étant reliée au moins indirectement à un deuxième élément du train planétaire (4) et un troisième élément du train planétaire (4) étant relié au moins indirectement à la sortie (A) de l'arrangement de transmission de puissance (1) ou formant celle-ci ;
- un arrangement de commande (14) étant présent, lequel est connecté en communication avec les composants fonctionnels suivants :
- des dispositifs de détection destinés à détecter au moins l'une des grandeurs suivantes
- une grandeur qui décrit au moins indirectement une valeur réelle (X9-ist) du mode de fonctionnement de la machine d'entraînement (9)
- une grandeur qui décrit au moins indirectement une valeur réelle (X2-ist) du niveau de remplissage du convertisseur de vitesse de rotation/couple (2, 16, 22) hydrodynamique ;
et des dispositifs de réglage destinés à commander les dispositifs (13) servant à influencer le niveau de remplissage du convertisseur de vitesse de rotation/couple (2, 16, 22) hydrodynamique ;
**caractérisée en ce qu'**un premier dispositif d'entraînement auxiliaire (20) est présent pour introduire au moins indirectement un couple d'entraînement dans le troisième élément du train planétaire (4).

13. Chaîne cinématique (10) selon la revendication 12, **caractérisée en ce qu'**au moins l'aubage de l'une des roues à aubes (P, T, L) du convertisseur de vitesse de rotation/couple (2, 16, 22) hydrodynamique comporte au moins une aube réglable par le biais d'un arrangement de réglage et/ou au moins une aube en plusieurs parties pourvue d'au moins un segment d'aube réglable.

14. Chaîne cinématique (10) selon la revendication 12 ou 13, **caractérisée en ce que** le convertisseur de vitesse de rotation/couple (2) hydrodynamique est réalisé sous la forme d'un convertisseur à rotation antagoniste (16) et un premier élément du train planétaire (4) est formé par la cage de transmission planétaire (8) du train planétaire (4), le deuxième élément par la roue solaire (6) du train planétaire (4) et le troisième élément la couronne de train planétaire (5) du train planétaire (4).

15. Chaîne cinématique (10) selon la revendication 14, **caractérisée en ce que** la roue de turbine (T) est reliée à la roue solaire (6) par le biais d'un arbre creux et l'arbre d'entrée (E) qui s'étend à travers l'arbre creux est relié à la cage de transmission planétaire (8) sur le côté du train planétaire (4) à l'opposé du convertisseur de vitesse de rotation/couple (2, 16) hydrodynamique.

16. Chaîne cinématique (10) selon la revendication 12 ou 13, **caractérisée en ce que** le convertisseur de vitesse de rotation/couple (2) hydrodynamique est réalisé sous la forme d'un convertisseur à rotation antagoniste (22), l'une des possibilités d'accouplement suivantes avec l'engrenage à superposition (3), notamment avec le train planétaire (4) étant offerte en alternative :
a) le premier élément du train planétaire (4) est formé par la couronne de train planétaire (5), le deuxième élément du train planétaire par la cage de transmission planétaire (8) et le troisième élément du train planétaire par la roue solaire (6) et la roue de turbine (T) est reliée à la cage de transmission planétaire (8) soit directement, soit par le biais d'un mécanisme d'inversion de marche ;
b) le premier élément du train planétaire (4) est formé par la couronne de train planétaire (5), le deuxième élément du train planétaire par la roue solaire (6) et le troisième élément du train planétaire par la cage de transmission planétaire (8) ;
c) le premier élément du train planétaire (4) est formé par la roue solaire (6), le deuxième élément du train planétaire par la couronne de train planétaire (5) et le troisième élément du train planétaire par la cage de transmission planétaire (8) ;
d) le premier élément du train planétaire (4) est formé par la roue solaire (6), le deuxième élément du train planétaire par la cage de transmission planétaire (8) et le troisième élément du train planétaire par la couronne de train planétaire (5) ;
e) le premier élément du train planétaire est formé par la cage de transmission planétaire (8), le deuxième élément du train planétaire par la couronne de train planétaire (5) et le troisième élément du train planétaire par la roue solaire (6).

17. Chaîne cinématique selon l'une des revendications 12 à 16,
**caractérisée en ce**
**que** le premier dispositif d'entraînement auxiliaire (20) est disposé et configuré de telle sorte que le couple d'entraînement est acheminé au troisième élément du train planétaire (4) conformément à au moins l'une des possibilités suivantes :
- introduction du couple d'entraînement directement dans le troisième élément du train planétaire (4),
- introduction du couple d'entraînement dans la liaison entre le troisième élément du train planétaire (4) et la sortie (A) de l'arrangement de transmission de puissance (1),
- introduction du couple d'entraînement au niveau de la sortie (A) de l'arrangement de transmission de puissance (1),
- introduction du couple d'entraînement dans la liaison entre la sortie (A) de l'arrangement de transmission de puissance (1) et la machine de travail (11),
- introduction du couple d'entraînement dans un convertisseur de vitesse de rotation/couple (23) relié au troisième élément ou à la liaison entre le troisième élément du train planétaire (4) et la sortie (A) ou à la liaison entre la sortie (A) et la machine de travail (11) .

18. Chaîne cinématique (10) selon l'une des revendications 16 et 17, **caractérisée en ce qu'**un convertisseur de vitesse de rotation/couple (23), notamment un engrenage à pignon droit réalisé sous la forme d'un engrenage démultiplicateur ou réducteur, est disposé après le train planétaire (4) dans le flux de force entre celui-ci et la machine de travail (11), la sortie du convertisseur de vitesse de rotation/couple (23) étant disposée de manière excentrique par rapport au train planétaire (4) et le premier dispositif d'entraînement auxiliaire (20) étant disposé au niveau de l'extrémité d'arbre (25) du convertisseur de vitesse de rotation/couple (23) libre à l'opposé du train planétaire (4).

19. Chaîne cinématique (10) selon l'une des revendications 12 à 18, **caractérisée en ce qu'**un deuxième dispositif d'entraînement auxiliaire (30), servant à introduire au moins indirectement un couple d'entraînement dans le premier élément du train planétaire (4), est présent.

20. Chaîne cinématique (10) selon la revendication 19, **caractérisée en ce que** le deuxième dispositif d'entraînement auxiliaire est disposé et configuré de telle sorte que le couple d'entraînement est acheminé au premier élément du train planétaire (4) conformément à au moins l'une des possibilités suivantes :
- introduction du couple directement dans le premier élément du train planétaire (4),
- introduction du couple dans la liaison entre le premier élément du train planétaire (4) et l'entrée (E) de l'arrangement de transmission de puissance (1).

21. Chaîne cinématique (10) selon l'une des revendications 12 à 20, **caractérisée en ce que** le premier et/ou le deuxième dispositif d'entraînement auxiliaire (20, 30) peut être désaccouplé de la chaîne cinématique (10) .

22. Chaîne cinématique selon la revendication 21, **caractérisée en ce que** le premier et/ou le deuxième dispositif d'entraînement auxiliaire (20, 30) sont reliés à la chaîne cinématique (10), notamment à un composant fonctionnel de la chaîne cinématique (10), par le biais d'un embrayage autosynchronisé (24, 29).

23. Chaîne cinématique selon l'une des revendications 12 à 22,
**caractérisée en ce**
**que** le premier et/ou le deuxième dispositif d'entraînement auxiliaire (20, 30) est réalisé sous la forme d'un dispositif choisi parmi les dispositifs suivants :
- un arrangement de rotation à arbre, notamment un arrangement de rotation à rotor,
- une machine d'entraînement, notamment un moteur électrique.

24. Chaîne cinématique selon l'une des revendications 12 à 23,
**caractérisée en ce**
**que** la machine d'entraînement (9) électrique est associée au dispositif de démarrage auxiliaire (26) pour la montée en régime, celui-ci comportant notamment :
- un moteur auxiliaire électrique et un convertisseur,
- un moteur auxiliaire électrique et un variateur de fréquence.

25. Chaîne cinématique selon l'une des revendications 12 à 23,
**caractérisée en ce**
**que** l'arrangement de commande (14) est connecté en communication avec des dispositifs de détection destinés à détecter l'état réel d'une grandeur qui caractérise au moins indirectement le mode de fonctionnement de la machine de travail et des dispositifs de réglage des machines d'entraînement auxiliaires.
